(19) Europäisches Patentamt

European Patent Office

Office européen des brevets

(11) EP 1 671 711 A1

(12) EUROPEAN PATENT APPLICATION
published in accordance with Art. 158(3) EPC

(43) Date of publication:
21.06.2006 Bulletin 2006/25

(51) Int Cl.:
B09B 3/00 (1980.01)     B09B 5/00 (1980.01)
B09C 1/08 (1995.01)

(21) Application number: 04792276.0

(22) Date of filing: 12.10.2004

(86) International application number:
PCT/JP2004/015032

(87) International publication number:
WO 2005/035149 (21.04.2005 Gazette 2005/16)

(84) Designated Contracting States:
AT BE BG CH CY CZ DE DK EE ES FI FR GB GR
HU IE IT LI LU MC NL PL PT RO SE SI SK TR

(30) Priority: 09.10.2003 JP 2003350590
30.03.2004 JP 2004098306
28.04.2004 JP 2004133155

(71) Applicant: EBARA CORPORATION
Tokyo 144-8510 (JP)

(72) Inventors:
• ADACHI, Masanori
  2510862 (JP)
• SHIMOMURA, Tatsuo
  1940031 (JP)

(74) Representative: Geyer, Ulrich F. et al
WAGNER & GEYER,
Patentanwälte,
Gewürzmühlstrasse 5
80538 München (DE)

(54) METHOD OF PURIFYING MATTER CONTAMINATED BY HEAVY METAL AND APPARATUS THEREFOR

(57) A clarification method and apparatus, which can reliably remove heavy metals, including their sparingly soluble fractions, from a contaminated solid material containing the heavy metals, such as soil, sludge, sediments, wastes, or incineration ash, are provided. A reaction vessel 2 is divided into an anode zone 10 containing an anode A, and a cathode zone 20 containing a cathode C, by a diaphragm M provided between the anode A and the cathode C. The cathode zone 20 is supplied with a contaminated solid material containing heavy metals via a contaminated solid material supply means 22, an acidic substance or an alkaline substance via an acidic substance or alkaline substance supply means 24, and in some cases, water via a water supply means 26. A slurry of their mixture is maintained in the condition of a reducing atmosphere and a strongly acidic or strongly alkaline atmosphere to dissolve the heavy metals and electrolytically deposit the heavy metals on the surface of the cathode, thereby separating the heavy metals from the contaminated solid material and interstitial water.

Fig. 1

**Description**

TECHNICAL FIELD

This invention relates to a clarification technology for an environmental material contaminated with heavy metals and, particularly, a clarification method and apparatus for separating and removing heavy metals, such as lead (Pb), cadmium (Cd) and mercury (Hg), from a contaminated solid material such as soil, sludge, sediments, wastes, or incineration ash.

The present invention also relates to a clarification technology for an environmental material contaminated with heavy metals and, particularly, a clarification method and apparatus for separating and removing heavy metals, such as lead (Pb), cadmium (Cd), tin (Sn) and chromium (Cr), from a contaminated solid material containing the heavy metals, such as soil, sludge, sediments, wastes, or incineration ash, and a contaminated liquid material containing the heavy metals, such as a leachate from the contaminated solid materials, industrial water, drainage, surface water, groundwater, or seawater.

BACKGROUND ART

As a method for clarifying and repairing soil contaminated with heavy metals, a proposal has been made for a method using an electrochemical technique (Japanese patent application laid-open publication gazette: Japanese Patent Application Laid-Open No. 1999-253924). According to this method, contaminated soil is mixed with an acidic solvent to form a slurry, heavy metal ions are extracted from the contaminated soil into the slurry (interstitial water), then the slurry containing the heavy metal ions is filtered through a filter while a direct current is being applied, and the heavy metal ions filtered from the slurry are transferred to a cathode portion partitioned by a filter, whereby the heavy metals are separated from the contaminated soil.

According to this method, however, the cathode portion and the slurry are separated by the filter. Thus, the interstitial water flows from the anode side to the cathode side through the filter, and the slurry is not reduced by the reduction potential of the cathode, but conversely, the slurry is highly likely to be maintained in an oxidizing atmosphere by the oxidation potential of the anode. Therefore, the problem arises that the fractions (portions) of solid deposits, such as lead, cadmium and mercury, taking sparingly soluble adhesion forms, called an iron-manganese bound form and an organic matter-bound form, cannot be extracted efficiently, and the heavy metal contents in the soil cannot be fully lowered.

As a method for removing heavy metals from incineration ash, a proposal has been made for a method which comprises adjusting the pH of contaminated incineration ash to form a homogeneous slurry, then introducing the slurry into a separation and recovery tank equipped with a stirrer, a cathode and an anode, and applying a direct current voltage to adhere heavy metals to the electrode (Japanese patent application laid-open publication gazette: Japanese Patent Application Laid-Open No. 2002-126692).

With this method, however, the slurry makes direct contact with the cathode and the anode provided in the separation and recovery tank, so that the slurry cannot be maintained in a reducing atmosphere under the influence of chlorine and oxygen gases generated from the anode. This poses the problems that the aforementioned fractions taking sparingly water-soluble adhesion forms, called the iron-manganese bound form and the organic matter-bound form, cannot be extracted efficiently, and the heavy metal contents in the incineration ash cannot be fully lowered.

As a method for removing heavy metals from incineration ash, another proposal has been made for a method which comprises extracting contaminated incineration ash with an acid, then subjecting the extract to solid-liquid separation, and electrolyzing the resulting extract while progressively lowering a cathode potential, thereby progressively depositing a plurality of metals to recover heavy metals (Japanese patent application laid-open publication gazette: Japanese Patent Application Laid-Open No. 2002-173790).

With this method, however, no reduction potential is applied during the acid extraction, so that the aforementioned fractions taking sparingly soluble adhesion forms cannot be extracted efficiently, and the concentrations of the heavy metals contained in the flying incineration ash cannot be fully lowered.

According to this method, moreover, the extraction of the heavy metals into an aqueous solution, and their separation from the aqueous solution are carried out in two stages, rather than simultaneously. Thus, there is the problem that the heavy metal concentrations in the aqueous solution at the extraction stage are increased, and heavy metal salts with small solubility product constants, in particular, cannot be dissolved completely. There is also the problem that solid-liquid separation is performed, with high concentrations of heavy metals being dissolved in interstitial water, and thus, the heavy metals contained in the interstitial water (sludge), which remain even after solid-liquid separation, cannot be removed from the incineration ash.

These conventional methods utilize a reaction in which heavy metals are dissolved with the use of an acid, and then the dissolved heavy metals are migrated and/or deposited by an electrode potential difference. Any of the above-described methods neither disclose nor suggest the idea of maintaining a contaminated solid material in a reducing atmosphere by the reduction potential of the cathode to promote the dissolution of heavy metals.

With these methods, moreover, the full dissolution of heavy metals requires that a large volume of a liquid phase as a solvent be ensured because the heavy metal dissolution is subject to restriction by their solubility product constants. As a result, the problem was posed that the volume of the entire treatment apparatus was large, making it difficult to downsize the apparatus.

DISCLOSURE OF THE INVENTION

PROBLEMS TO BE SOLVED BY THE INVENTION

It is an object of the present invention to provide a clarification method and apparatus for a contaminated solid material which can reliably remove heavy metals, including their sparingly soluble fractions (portions) from a contaminated solid material such as soil, sludge, sediments, wastes, or incineration ash, and which can lower the concentrations of the heavy metals contained in the solid contaminated material, and can exclude a contamination risk now and in the future.

It is another object of the present invention to provide a clarification method and apparatus for a contaminated solid material which remove heavy metals from a solid contaminated material, such as soil, sludge, sediments, wastes, or incineration ash, more efficiently while preventing the deposition and accumulation of the heavy metals on a cathode from being inhibited by the shearing force of a slurry imparted to the cathode.

It is still another object of the present invention to provide a clarification method and apparatus for a contaminated solid material in which a cathode zone and an anode zone are separated by a diaphragm, and a solid or contaminated liquid material containing heavy metals is brought into contact with a cathode to remove the heavy metals. The method and apparatus are characterized by the shape of the diaphragm and the arrangement of the electrodes which are practical and highly efficient, and which enable the apparatus, despite its large size, to remove the heavy metals efficiently from the contaminated material.

MEANS FOR SOLVING THE PROBLEMS

The inventors diligently conducted studies, and have found that unlike conventional methods, a solid material contaminated with heavy metals is maintained in the condition of a reducing atmosphere and a strongly acidic or strongly alkaline atmosphere, whereby the heavy metals contained in the contaminated solid material can be dissolved, and the heavy metals, including sparingly soluble fractions (portions), can be removed from the contaminated solid material.

Generally, heavy metals are present in a form, such as an exchangeable form, a carbonate bound form, an iron-manganese bound form, or an organic matter-bound form, in the solid contaminated material. Among these forms, the heavy metals present in the exchangeable form enter a corrosion region under strongly acidic or strongly alkaline atmosphere, and their water dissolution concentrations are increased. On the other hand, the heavy metals present in forms, such as a carbonate bound form, an iron-manganese bound form, and an organic matter-bound form, have low solubility even in a strongly acidic or strongly alkaline atmosphere, and they are difficult to dissolve. When the heavy metals present in such sparingly soluble forms are further subjected to a reducing atmosphere, they can be transferred into a corrosion region, and their solubility in water can be increased.

The inventors have obtained the following findings: A diaphragm is located between a cathode supplied with a reduction potential and an anode to separate a cathode zone containing the cathode from an anode zone containing the anode. A contaminated solid material is supplied to the cathode zone, and brought into contact with the cathode, but not brought into contact with the anode. In this condition, the contaminated solid material containing the heavy metals can be maintained in a reducing atmosphere (i.e., an atmosphere in which there is no oxidizing compounds). At the same time, the electrolytic deposition of the heavy metals on the surface of the cathode can be performed. Since the heavy metals are deposited on the surface of the cathode and removed from interstitial water, heavy metal salts with low solubility product constants can also be sequentially dissolved, and the efficiency of extraction can be further increased.

If the heavy metal contaminant is mercury, volatile 0-valent mercury produced upon reduction of mercury ions accompanies a hydrogen gas generated from the surface of the cathode and/or a nitrogen gas supplied into the tank for gas diffusion, and easily migrates into a gaseous phase, so that its separation from interstitial water can take place. This is another finding by the inventors.

Based on these findings, the inventors propose a method and apparatus for separating heavy metals effectively from a contaminated solid material and interstitial water, the method and an apparatus targeting contaminated solid materials as a whole, by separating an anode and a cathode in an electrolytic reaction vessel by a diaphragm, adding the contaminated solid material containing heavy metals, as an object to be treated, and an acidic substance or an alkaline substance to a cathode zone to adjust the pH to 3 or lower or 12 or higher, and further imparting a reducing atmosphere. According to this method, a reaction in which the heavy metals contained in the contaminated solid material are reduced by the cathode (reduction electrode) to be dissolved, and a reaction in which the heavy metals are deposited on the cathode are performed in parallel. Because of the reduction potential of the cathode, the contaminated solid material is maintained in the reducing atmosphere to promote the dissolution of the heavy metals. Thus, even the sparingly soluble fractions of the heavy metals, which are not dissolved under strongly acidic or strongly alkaline conditions, can be dissolved, and the heavy metals can be separated effectively from the solid contaminated material and interstitial water.

This method simultaneously performs the reaction in which the heavy metals contained in the contaminated solid material are reduced by the cathode to dissolve heavy metal ions, and the reaction for deposition of the heavy metals on the cathode. Thus, it is necessary that the contaminated solid material and the electrode be in contact as much as possible within the electrolytic reaction vessel, so that the contaminated solid material is formed into a slurry, which is fully stirred and brought into contact with the electrode. As a result, it was confirmed that the cathode was constantly exposed to a shearing force produced by a flow of the slurry, causing a phenomenon of the heavy metals deposited on the cathode being peeled off, and a phenomenon of cathode wear.

Under these circumstances, the inventors diligently conducted studies, and have found that when a solid material contaminated with heavy metals is maintained in the condition of a reducing atmosphere and a strongly acidic or strongly alkaline atmosphere to deposit the heavy metals from the contaminated solid material on an electrode by an electrolytic deposition reaction, and a shearing force imparted to the electrode by a slurry containing the contaminated solid material is decreased or excluded, whereby the deposition of the heavy metals on the electrode can be performed more efficiently. Based on this finding, the inventors propose a method and an apparatus which diminish the phenomenon of peeling-off of the heavy metals deposited on the cathode, and the phenomenon of cathode wear, thereby separating the heavy metals from the contaminated solid material and interstitial water more efficiently.

When a predetermined amount of heavy metals is deposited on the cathode, supply of an electric current is stopped for replacement of the cathode. On this occasion, problems were confirmed, such that the heavy metals deposited on the cathode dissolve again, and heavy metal ions move to the anode zone, delaying the resumption of the reaction. Thus, the present invention also proposes a method and an apparatus for more efficient separation of heavy metals from a contaminated solid material and interstitial water, wherein plural cathodes are provided in a reaction vessel to allocate different roles to the respective cathodes, and even if one of the cathodes is out of order in terms of action, or is subjected to replacement or maintenance, the operation of the apparatus can be continued.

Furthermore, if an apparatus for clarifying a contaminated material, such as soil, is actually constructed, there is no choice but to render the volume of a reaction vessel large in order to complete treatment within a practical clarification period. If contaminated soil treatment is assumed, for example, a volume of 10 $m^3$ or larger is generally required. If a flat membrane type diaphragm is applied to such a large reaction vessel, it has been confirmed that the distance between the electrode and the diaphragm and/or the distance between the electrode and the reaction liquid (or slurry) become or becomes large, lowering the reaction rate and the efficiency of removal. To avoid this problem, it is conceivable to form the reaction vessel into a vertically flat shape, and stack reaction vessel compartments horizontally via diaphragms, thereby shortening the above distance. However, the use of many flat membranes of a large size is not practical because it increases the risk of leakage due to swelling of the membrane, and it poses difficulty in repair and replacement of the membrane. The inventors have found that in a method for clarifying a contaminated solid or liquid material containing heavy metals, an anode is disposed within a cylindrical, box-shaped or bag-shaped diaphragm with a closed bottom disposed in a reaction vessel, and a cathode is disposed outside the diaphragm, whereby the distance between the electrode and the diaphragm and/or the distance between the electrode and a reaction liquid (or slurry) can be maintained sufficiently small even in an upsized actual apparatus, with the result that the preferred efficiency of contaminant removal is obtained, and repair and replacement of the diaphragm become easy. Based on this finding, the inventors also propose a method and an apparatus for clarifying a contaminated material, having the shape of a diaphragm and the arrangement of electrodes which are practical and highly efficient.

According to a first aspect of the present invention, there is provided a contaminated solid material clarification method for removing heavy metals from a contaminated solid material containing the heavy metals, comprising performing a dissolution step and a separation step in parallel in the same container, the dissolution step being the step of dissolution of heavy metal ions from the contaminated solid material, and the separation step being the step of separating the dissolved heavy metal ions from the contaminated solid material and interstitial water; and maintaining the contaminated solid material in the condition of a reducing atmosphere and a strongly acidic or strongly alkaline atmosphere until the dissolution and separation of the heavy metal ions are completed.

In more detail, the heavy metals present in a form, such as an exchangeable form, a carbonate bound form, an iron-manganese bound form, or an organic matter-bound form, in the contaminated solid material are brought into contact with a sufficient amount of an acidic aqueous solution or an alkaline aqueous solution in a reducing atmosphere provided by a cathode to perform ion exchange and desorption, thereby dissolving the heavy metals into the aqueous solution and electrolytically depositing them on the surface of the cathode. Alternatively, if the heavy metal is mercury, it is removed by a gas exposure method used in removing heavy metals from the contaminated solid material. In the present invention, the dissolution and separation of the heavy metals from the contaminated solid material are completed in a single tank. In the solid-liquid separation step as post-treatment, therefore, there is no need to maintain the slurry in a reducing atmosphere. Moreover, the heavy metals are deposited on the cathode surface and removed from interstitial water. Thus, the heavy metals with low solubility product constants are sequentially dissolved, and the efficiency of extraction can be further increased.

Preferred examples of the contaminated solid material, which can be clarified by the present invention are contaminated solid materials containing heavy metals, such as soil, sludge, sediments, wastes, incineration ash, and slime. Preferred examples of the heavy metals to be separated and removed by the present invention are lead (Pb), cadmium (Cd), and mercury (Hg).

The reducing atmosphere used in the present invention is preferably formed by adjustment of the cathode potential.

The adjustment of the cathode potential is preferably performed to bring a cathode potential of -0.16V or lower, more preferably -0.25V or lower, with respect to a hydrogen standard electrode. The provision of the reducing atmosphere by the adjustment of the cathode potential can be performed by disposing a diaphragm between an anode and a cathode, in a combination of the anode, the diaphragm, a reference electrode, and the cathode. In this case, an acid is supplied from the anode zone via the diaphragm, thus affording the advantage that the necessity for supplying a large amount of acid can be obviated.

The cathode usable in the present invention is preferably one having conductivity, involving minimal loss due to friction with the slurry containing the solid contaminated material, and having a higher standard electrode potential than that of the contaminated heavy metals. Examples are glassy carbon (TOKAI CARBON CO., LTD.), copper, titanium, and titanium-coated metal. The cathode preferably has a large surface area for electrolytic deposition of the heavy metals, and preferably has, for example, a fibrous or a network structure.

The anode used in the present invention is preferably configured to be capable of a passage of current without coming into direct contact with the contaminated solid material so that the contaminated solid material is not exposed to an oxidizing atmosphere. The anode usable in the present invention preferably has conductivity, has resistance in a strongly acidic (preferably pH 3 or lower) or strongly alkaline (preferably pH 12 or higher) aqueous solution, and has resistance to anode corrosion. Examples are furnace black, graphite, titanium, and titanium-coated metal.

In the present invention, the diaphragm is located between the cathode and the anode to separate a cathode zone containing the cathode from an anode zone containing the anode.

An example of the diaphragm usable in the present invention is a diaphragm which has the function of controlling the movement of a substance other than particular ions in the aqueous solution, which has the function of performing ion exchange to close the circuit between the anode and the cathode, and has the function of preventing permeation of a chlorine gas, an oxygen gas, dissolved chlorine, dissolved oxygen, etc. to maintain the reducing atmosphere of the cathode zone. A preferred example is a fluorocarbon resin-based ion exchange membrane (cation exchange membrane) having sulfonic acid groups. Sulfonic acid groups have hydrophilicity and have a high cation exchange ability.

As more inexpensive diaphragms, fluorocarbon resin-based ion exchange membranes fluorinated only at the backbone, or aromatic hydrocarbon-based ion exchange membranes can also be utilized. Preferred examples of such ion exchange membranes are commercially available products, such as NEPTON CR61AZL-389 produced by IONICS, NEOSEPTA CM-1 OR CMB produced by Tokuyama Corp., and Selemion CSV produced by Asahi Glass Co., Ltd.

An anion exchange membrane can also be used as a diaphragm for use in separating the anode and the contaminated solid material. Concretely, a hydroxide ion exchange membrane having an ammonium hydroxide group can be preferably used. Preferred examples of such an anion exchange membrane are commercially available products, such as NEPTON AR103PZL-389 produced by IONICS, NEOSEPTA AHA produced by Tokuyama Corp., and Selemion ASV produced by Asahi Glass Co., Ltd.

Further examples of the diaphragm usable in the present invention are those having no functional groups, including MF (microfilter) or UF (ultrafilter) membranes, porous filter media such as ceramics and asbestos, and woven fabrics made of nylon, polyethylene, and polypropylene. These diaphragms without functional groups are preferably those having a pore diameter of 5 $\mu$m or less, and not permeable to gases under unpressurized conditions. Preferred examples are commercially available products, such as PE-10 membrane produced by Schweiz Seidengazefabrik, and NY1-HD membrane produced by Flon Industry.

The strongly acidic atmosphere used in the present invention is preferably such that the pH of interstitial water of the contaminated solid material is 3 or lower, more preferably 2 or lower. Such a strongly acidic atmosphere can exclude the influence of iron sulfide present in the soil. The strongly acidic atmosphere in the present invention can be formed by adding an acid to the contaminated solid material. Preferred examples of the acid which can be added are hydrochloric acid, and organic acids, such as methanesulfonic acid, formic acid, acetic acid, citric acid, oxalic acid, and terephthalic acid.

The strongly alkaline atmosphere used in the present invention is preferably such that the pH of interstitial water of the contaminated solid material is 12 or higher, more preferably 13 or higher. The strongly alkaline atmosphere in the present invention can be formed by adding an alkaline substance to the contaminated solid material. Preferred examples of the alkaline substance which can be added are sodium hydroxide and potassium hydroxide.

Generally, heavy metals are easier to dissolve in the strongly acidic atmosphere than in the strongly alkaline atmosphere. Depending on the nature of the contaminated solid material to be removed, however, the strongly alkaline atmosphere may be preferred to the strongly acidic atmosphere. For example, if the contaminated solid material is soil containing a large amount of iron, the strongly acidic atmosphere may dissolve iron, posing the problem of coating the electrode or clogging. Thus, the strongly alkaline atmosphere is preferred. Depending on the state of the solid contaminated material, moreover, the addition of an acidic substance or an alkaline substance may be unnecessary. If the contaminated solid material is incineration ash, the strongly alkaline atmosphere can be formed, without the need to add an alkaline substance, because the incineration ash is strongly alkaline.

In the present invention, a surfactant, a complex ion forming agent and a chelating agent which contribute to the dissolution of heavy metals and their stabilization in an aqueous solution, a buffer for suppressing pH changes of the solid contaminated material, an electron donor and a reducing agent for maintaining the reducing atmosphere, and substances selected from their combinations may be added to the solid contaminated material, depending on the in-situ conditions such as the soil to be clarified. Preferred examples of these additives are SDS (sodium dodecyl sulfate) and cationic surfactants as the surfactants, citric acid, oxalic acid and lactic acid as the complex ion forming agents, EDTA (ethylenediaminetetraacetic acid) and NTA (nitrilotriacetic acid) as the chelating agents, phosphate buffer, TRIS buffer, and hydrochloric acid-potassium chloride buffer as the buffers, and hydrogen, sugars, organic acids (salts), alcohol, various organic drainages, ascorbic acid, DTT (dithiothreitol), titanium citrate, iron powder, and granular iron as the electron donors. If the complex ion forming agent or the chelating agent is added, there is a possibility of a decline in a potential at which the heavy metals are electrolytically deposited on the surface of the cathode. Thus, it is necessary to conduct a preliminary test and set an appropriate potential.

In the present invention, the step of separating the heavy metal ions includes the step of depositing the heavy metals on the cathode surface. During this step, it is preferred to deposit the heavy metals on the cathode surface under conditions in which a flow of the slurry containing at least the contaminated solid material is controlled or suppressed so as to decrease the shearing force of the slurry acting on the cathode surface so that the shearing force acting on the cathode surface does not impede the deposition of the heavy metals.

According to this embodiment, there is provided a contaminated solid material clarification method for removing heavy metals from a contaminated solid material containing the heavy metals, comprising maintaining the contaminated solid material in the condition of a strongly acidic or strongly alkaline atmosphere and a reducing atmosphere, which is provided by adjustment of a cathode potential, under conditions, under which the deposition of the heavy metals is not impeded by a shearing force exerted on the cathode surface by a slurry containing at least the contaminated solid material, thereby depositing the heavy metals on the cathode surface.

In the present embodiment, the contaminated solid material containing the heavy metals is maintained under conditions where the deposition of the heavy metals on the cathode surface is not impeded by the shearing force exerted on the cathode surface by the slurry formed from the contaminated solid material. Thus, the peeling of the heavy metals deposited on the cathode surface, and the wear of the cathode are prevented.

In the present embodiment, the contaminated solid material containing the heavy metals is preferably treated as a slurry so that the incorporated heavy metals will be dissolved as ions. This slurry contains, at least, an acidic or alkaline substance so as to maintain the contaminated solid material in a strongly acidic or strongly alkaline atmosphere. With the exception of a case where an alkaline substance or an acidic substance is incorporated, such as a case where the contaminated solid material is incineration ash, it is preferred to add an acidic substance or an alkaline substance in forming the slurry.

The acidic substance, which can be used in the present embodiment, may preferably include hydrochloric acid, or organic acids, such as formic acid, acetic acid, citric acid, oxalic acid, or terephthalic acid. The slurry containing such an acidic substance is maintained in a strongly acidic atmosphere preferably such that the pH of interstitial water of the contaminated solid material is 3 or lower, more preferably 2 or lower. Such a strongly acidic atmosphere can exclude the influence of iron sulfide present in the soil.

The alkaline substance which can be used in the present embodiment may preferably include sodium hydroxide and potassium hydroxide, for example. The slurry containing such an alkaline substance is maintained in a strongly alkaline atmosphere preferably such that the pH of interstitial water of the contaminated solid material is 12 or higher, more preferably 13 or higher.

In the present embodiment, the cathode potential is adjusted to maintain the contaminated solid material containing the heavy metals in a reducing atmosphere, thereby depositing the heavy metals on the cathode surface. Thus, it is necessary to keep the slurry containing the heavy metals in contact with the cathode, thereby causing an electrolytic deposition reaction.

The reaction rate $K_0$ at which heavy metals are deposited on the cathode surface is determined as in the following relational expression by the diffusive substance moving speed $K_D$ of heavy metal ions and the cathode surface deposition rate $K_R$ of the heavy metal ions:
**[Equation 1]**

$$1/K_0 = 1/K_D + 1/K_R$$

The cathode surface deposition rate $K_R$ is determined by the type of heavy metal ions and temperature. In the case of lead, for example, a temperature of 30 to 40°C is preferred. In the case of heavy metals other than lead, a temperature of 25 to 80°C is preferred. Generally, as the temperature rises, the ion diffusion rate increases, and heavy metals can be deposited on the cathode surface until a high current density (e.g., $11.48A/m^2$) is reached. However, crystal grains deposited tend to overgrow, and hydrogen overpotential lowers to facilitate the formation of hydroxides. Thus, the temperature in the above-mentioned range is advantageous.

The diffusive substance moving speed $K_D$ is proportional to the state of stirring and temperature within a slurry formation tank, and thus it is necessary to stir the slurry sufficiently. However, when the slurry is stirred, the shearing force acts on the cathode surface, and heavy metals deposited on the cathode surface may peel off. When the deposited heavy metals peel off from the cathode surface, the efficiency of separation and removal of the heavy metals lowers. There is need to exclude or suppress such influence of the shearing force by the slurry.

In the present embodiment, the suppression of the shearing force exerted on the cathode surface by the slurry is preferably performed by locating the cathode at an upper position within the slurry formation tank, and either controlling the solid particle size distribution of the slurry such that solids with small diameters are present in an upper portion of the slurry and solids with large diameters are present in a lower portion of the slurry, or controlling the flow of the slurry.

The control over the solid particle size distribution of the slurry can preferably use a method of imparting an upward flow to the slurry. The method of imparting an upward flow to the slurry may preferably be to eject the slurry upwardly from the bottom of the slurry formation tank, thereby forming an upward flow, or to introduce air from the bottom of the slurry formation tank, thereby forming the slurry into an upward flow. By forming the slurry containing the solids with various particle diameters into the upward flow, the solids with large particle diameters resist the upward flow and remain in the lower portion of the slurry formation tank, while the solids with small particle diameters can ascend with priority. As a result, the solid particle size distribution of the slurry is such that the particle size is smaller in the upper layer, and larger in the lower layer. Control of the solid particle size distribution can be exercised by controlling the flow velocity of the upward flow of the slurry, and knowledge of the terminal velocity of the upward flow enables the solid particle size distribution to be estimated.

If the contaminated solid material is soil, for example, solids with particle diameters of 2 mm or less are often the object to be clarified. Of these solids, a clay fraction containing low-degradable heavy metals comprises clay particles having a particle diameter of 0.02 mm and a density of about $2.7 \times 10^3$ kg/m³. Assume that the density of a slurry containing such a contaminated solid material is 1.0 to $1.2 \times 10^3$ kg/m³, and the viscosity of the slurry is $1 \times 10^{-3}$ N·s/m². In this case, the terminal velocity of the clay particles can be calculated from the following Stokes equation

**[Equation 2]**

Terminal velocity = (particle diameter)$^2$ × (particle density − slurry density) × gravitational acceleration × (slurry viscosity)$^{-1}$/18

at about 3.3 to $3.7 \times 10^{-4}$ m/s. The Reynolds number Re of the particles in this case is calculated from the following equation

[Equation 3]

$$Re = (\text{particle diameter}) \times (\text{terminal velocity}) \times$$

$$(\text{slurry density}) \times (\text{slurry viscosity})^{-1}$$

at 1 or less. Thus, the use of the Stokes equation is appropriate.

If the contaminated solid material contains large amounts of a fine particle fraction or clay particles, the fine particle fraction or the clay particles are electrically charged, and the component particles repel each other, and become more difficult to sediment. This means a low terminal velocity, so that the desired solid particle size distribution can be obtained, even when the flow velocity of the upward flow is rendered low.

If the contaminated solid material contains a particle fraction having a Reynolds number of more than 1, the terminal velocity can be calculated using the following Allen's equation

[Equation 4]

$$\text{Terminal velocity} = \{(\text{particle density} - \text{slurry}$$

$$\text{density})^2 \times (\text{gravitational acceleration})^2 \times (\text{slurry}$$

$$\text{viscosity})^{-1} \times (\text{slurry density})^{-1} \times 4/225\}^{1/3} \times$$

$$(\text{particle diameter})$$

instead of the Stokes' equation.

By setting the terminal velocity of the upward flow with the use of the above-described chemical engineering profiling, the desired particle size distribution of solids in the slurry can be obtained.

As described above, the solid particle size distribution of the slurry is controlled such that solids of smaller particle diameters are present in a higher layer portion of the slurry, while solids of larger particle diameters are present in a lower layer portion of the slurry. Such control can avoid a shearing force being exerted by solids of large particle diameters on the cathode surface located at the upper position within the slurry formation tank. Consequently, the shearing force applied to the cathode surface can be decreased.

Control of the slurry flow is preferably performed in such a manner that the slurry flow is controlled so as to decrease the shearing force of the slurry on the cathode surface. The control of the slurry flow can be carried out by disposing a cathode-protecting member at a position lower than the cathode located at the upper position within the slurry formation tank. The cathode-protecting member may be disposed so as to enclose the cathode, or may be disposed as a partition in the path of the slurry flow heading toward the cathode surface.

When the cathode-protecting member is used, the shearing force of the slurry acting on the cathode surface is decreased, but the cathode-protecting member needs to be provided to maintain the cathode surface and the slurry in contact. Therefore, if the cathode-protecting member is disposed so as to enclose the cathode, it is preferred to use, as the cathode-protecting member, a material through which the slurry can pass, such as a porous material, a honeycomb type material, or a network type material. If the cathode-protecting member is disposed as a partition by using a plate material, it is preferred to adjust, as appropriate, the distance between the cathode surface and the partition, the inflow angle of the slurry flow, etc.

As the material constituting the cathode-protecting member, there can be preferably used a material which withstands friction and has resistance to a strong acid and a strong alkali. Concretely, the material constituting the cathode-protecting member may preferably include tempered glass, quartz, reinforced plastics, synthetic resins such as fluorocarbon resins, fiber reinforced composite materials such as FRP, graphite, glassy carbon, concrete, ceramics, titanium, and a metal, such as iron, surface treated for corrosion resistance.

In the present embodiment, the cathode potential is adjusted in order to maintain the slurry containing the contaminated solid material in the reducing atmosphere.

The adjustment of the cathode potential is preferably performed to bring a cathode potential of -0.16V or lower, more preferably -0.25V or lower, with respect to a hydrogen standard electrode. If the heavy metals to be removed are lead and cadmium, for example, it is preferred to control the cathode potential to -0.16V or lower, but -0.35V or higher, with respect to the hydrogen standard electrode. Within this range, the electrolytic deposition reaction of lead and cadmium can be specifically caused, and the deposition of iron contained in the slurry or the generation of hydrogen upon electrolysis of water can be suppressed. The provision of the reducing atmosphere by the adjustment of the cathode potential can be performed by a combination of an anode, a reference electrode, and a cathode and, as appropriate, a diaphragm.

The cathode usable in the present embodiment is preferably a material having conductivity, having resistance to strong acidity (preferably, pH 3 or lower) and strong alkalinity (preferably, pH 12 or higher), involving minimal loss due to friction with the slurry containing the contaminated solid material, having a higher standard electrode potential than that of the contaminated heavy metals, and allowing heavy metals to deposit easily or allowing the deposited heavy metals to be electrodeposited satisfactorily. Examples are noble metals such as copper, platinum, silver and gold, materials having these metals plated or carried thereon, glassy carbon (TOKAI CARBON CO., LTD.), graphite, iron, stainless steel, titanium, and products surface-treated with these materials. The cathode preferably has a large surface area for electrolytic deposition of the heavy metals, and preferably has, for example, a fibrous or network structure.

The anode usable in the present embodiment is preferably configured to be capable of current passage without intimately contacting the contaminated solid material so as not to expose the contaminated solid material to an oxidizing atmosphere. The anode usable in the present invention is preferably one having conductivity, having resistance in a strongly acidic (preferably, pH 3 or lower) or strongly alkaline (preferably, pH 12 or higher) aqueous solution, and having resistance to anode corrosion. Examples are furnace black, graphite, electrically conducting materials surface-treated with a conductive diamond film (i.e., so-called diamond electrodes), and materials having a titanium surface coated with titanium oxide or ruthenium oxide which are used in the brine electrolysis industry.

In some cases, it is preferred to use a diaphragm in order to isolate the anode from the slurry. An anion exchange membrane can be used as the usable diaphragm. Concretely, the anion exchange membrane may include a hydroxide ion exchange membrane having an ammonium hydroxide group preferably. Preferred examples of such an anion exchange membrane are commercially available products, such as NEPTON AR103PZL-389 produced by IONICS, NEOSEPTA AHA produced by Tokuyama Corp., and Selemion ASV produced by Asahi Glass Co., Ltd. Further examples of the usable diaphragm are those having no functional groups, including MF (microfilter) or UF (ultrafilter) membranes, porous filter media such as ceramics and asbestos, and woven fabrics made of nylon, polyethylene, and polypropylene. These diaphragms without functional groups are preferably those having a pore diameter of 5 $\mu$m or less, and not permeable to gases under unpressurized conditions. Preferred examples are commercially available products, such as PE-10 membrane produced by Schweiz Seidengazefabrik, and NY1-HD membrane produced by Flon Industry.

Moreover, the diaphragm may be located between the anode and the cathode to separate a cathode zone containing the cathode from an anode zone containing the anode. Locating the diaphragm is advantageous in that the need to supply a large amount of an acid can be obviated, because an acid is supplied from the anode zone via the diaphragm. An example of the diaphragm usable is a diaphragm which has the function of controlling the movement of a substance other than particular ions in the aqueous solution, which has the function of performing ion exchange to close the circuit between the anode and the cathode, and has the function of preventing permeation of a chlorine gas, an oxygen gas, dissolved chlorine, dissolved oxygen, etc. to maintain the reducing atmosphere of the cathode zone. A preferred example is a fluorocarbon resin-based ion exchange membrane (cation exchange membrane) having sulfonic acid groups. Sulfonic acid groups have hydrophilicity and have a high cation exchange ability. As more inexpensive diaphragms, fluorocarbon resin-based ion exchange membranes fluorinated only at the backbone, or aromatic hydrocarbon-based ion exchange membranes can also be utilized. Preferred examples of such ion exchange membranes are commercially available products, such as NEPTON CR61AZL-389 produced by IONICS, NEOSEPTA CM-1 OR CMB produced by Tokuyama Corp., and Selemion CSV produced by Asahi Glass Co., Ltd.

In the present embodiment, moreover, a surfactant, a complex ion forming agent and a chelating agent which contribute to the dissolution of the above heavy metals and their stabilization in an aqueous solution, a buffer for suppressing pH changes of the contaminated solid material, an electron donor and a reducing agent for maintaining the reducing atmosphere, and substances selected from their combinations may be added to the slurry containing the contaminated solid material, depending on the in-situ conditions such as the soil to be clarified.

In the present invention, it is preferred to dispose a plurality of cathodes in a reaction vessel, and perform the dissolution step and the separation step in parallel in the reaction vessel. The present embodiment is a contaminated solid material clarification method for clarifying a contaminated solid material containing heavy metals, comprising performing a step of accommodating a slurry containing the contaminated solid material into a container, maintaining the slurry in strong acidity or strong alkalinity and also adjusting the potential of the cathodes disposed in the container, thereby placing the slurry in a reducing atmosphere to dissolve the heavy metal ions into the slurry, and a step of depositing the dissolved heavy metal ions from the slurry to separate the heavy metal ions, the dissolution step and the separation step being performed in parallel, characterized by disposing the plurality of cathodes in the container.

According to the present embodiment, the slurry containing the contaminated solid material is accommodated in the container, the slurry is maintained in strong acidity or strong alkalinity, and the potential of the cathodes disposed in the container is adjusted, whereby the slurry is placed in a reducing atmosphere to dissolve the heavy metals into the slurry. The dissolved heavy metal ions are further deposited from the slurry within the container for separation. This separation step is performed in parallel with the dissolution step. Since the plurality of cathodes are disposed in the container (reaction vessel), different roles can be allocated to these cathodes. Even if the action of one of the cathodes is out of order, or any one of them is replaced or subjected to maintenance, the operation of the apparatus can be continued.

In the present embodiment, it is further preferred that at least one of the plurality of cathodes is a cathode for dissolution mainly acting to dissolve heavy metal ions, and at least one of the other cathodes is a cathode for deposition mainly acting to deposit the heavy metal ions. In this case, dissolution and deposition are performed by different cathodes, so that conditions suitable for the respective reactions can be set.

The cathode for deposition is preferably disposed at a position nearer to the anode than the cathode for dissolution. As a result, the proton concentration in the neighborhood of the cathode for deposition is higher than that in the neighborhood of the cathode for dissolution, so that the current density proportional to the proton concentration is also high. The deposition of a metal on the electrode takes place at a higher deposition rate at a greater current density. Thus, the heavy metals are deposited more easily on the cathode for deposition.

The cathode for deposition and the cathode for dissolution are preferably controlled to electrode potentials different from each other. Thus, dissolution and deposition can be performed for the respective electrodes at suitable potentials.

The cathode for deposition and the cathode for dissolution preferably have physical properties different from each other. Preferably, the cathode for deposition and the cathode for dissolution are composed of substances having different standard electrode potentials, and a substance having a relatively high standard electrode potential is used as the cathode for deposition, while a substance having a relatively low standard electrode potential is used as the cathode for dissolution. Also preferably, the cathode for deposition is composed of a substance on which deposited heavy metals are electrodeposited more easily than a substance constituting the cathode for dissolution. By providing the respective cathodes with different physical properties required for deposition and dissolution, better actions and effects are obtained.

The reducing atmosphere used in the present embodiment is formed by the adjustment of the cathode potential. The adjustment of the cathode for dissolution potential and the cathode for deposition potential is preferably made such that the potential is -0.16V or less, more preferably -0.25V or less, with respect to the hydrogen standard electrode. The provision of the reducing atmosphere by the adjustment of the cathode for dissolution potential and the cathode for deposition potential can be achieved by the control of the distance between the anode and the cathode for deposition, the control of the distance between the cathode for deposition and the cathode for dissolution, and the flow within the apparatus, in the combination of the anode, a reference electrode, the cathode for dissolution, and the cathode for deposition.

The cathode for dissolution usable in the present embodiment is desirably that having conductivity, and involving minimal loss due to friction with the slurry containing the contaminated solid material. In connection with its surface treatment, the cathode for dissolution should desirably be finished to have as smooth a flat surface and as smooth a curved surface as possible, so that heavy metals are minimally deposited on the surface and, even if heavy metals are deposited, the deposit can be easily removed. The shape of the cathode for dissolution is preferably a shape which minimally wears upon exposure to the slurry, such as an oblong plate shape, a disk shape, a dish shape, a bowl shape, or a spherical shape. Examples of the material for the cathode for dissolution are carbon, iron, titanium, copper, and any of the materials subjected to surface treatment.

The material for the cathode deposition is a material having conductivity, having a higher standard electrode potential than that of heavy metals, and allowing heavy metals to deposit easily, or further, a material allowing the deposited heavy metals to be electrodeposited satisfactorily. Examples are noble metals such as copper, platinum, silver and gold, and materials coated with these metals. Since the above-mentioned noble metals seem to be used often, their shapes should desirably be those providing a maximum specific surface area. Moreover, the cathode for deposition is desired to have a structure which facilitates removal when heavy metals to be recovered are redissolved by a high potential given to the electrode after the heavy metals are deposited on the surface of the electrode. Furthermore, the surface of the cathode for deposition preferably has a three-dimensional structure, such as a structure with irregularities or a network structure, so that the heavy metals deposited will not peel off again in a reduction reaction vessel.

The anode used in the present embodiment is preferably one having conductivity, having resistance in a strongly acidic (preferably, pH 3 or lower) or strongly alkaline (preferably, pH 12 or higher) aqueous solution, and having resistance to anode corrosion. Examples are furnace black, graphite, carbon, and titanium treated for corrosion protection.

The strongly acidic atmosphere and the strongly alkaline atmosphere used in the present embodiment are in the aforementioned pH ranges, and can be formed with the addition of, or without the addition of, the aforementioned acid and alkali. If desired, the aforementioned additives can be used further.

According to a second aspect of the present invention, there is provided a contaminated solid material clarification apparatus comprising a reaction vessel including a contaminated solid material supply means for supplying a contaminated solid material containing heavy metals, a cathode for providing a reducing atmosphere, a diaphragm, and an anode; the diaphragm defining an anode zone containing the anode, and a cathode zone containing the cathode and the contaminated solid material supply means; and the cathode zone being maintained in the reducing atmosphere and a strongly acidic or strongly alkaline atmosphere, and dissolution of heavy metal ions from the contaminated solid material, and separation of the dissolved heavy metal ions from the contaminated solid material and interstitial water being performed in parallel in the reaction vessel.

With the exception of a case where the contaminated solid material to be treated in the present invention is an alkaline material or an acidic material such as incineration ash, it is preferred to supply an acidic or alkaline substance to the contaminated solid material, in order to maintain the contaminated solid material in a strongly acidic or strongly alkaline atmosphere. Accordingly, in the apparatus of the present invention, the reaction vessel (or a slurry formation tank) is preferably further provided with a means for supplying an acidic or alkaline substance.

Preferably, therefore, there is provided a contaminated solid material clarification apparatus comprising a reaction vessel including a contaminated solid material supply means for supplying a contaminated solid material containing heavy metals, an acidic substance or alkaline substance supply means for supplying an acidic substance or an alkaline substance, a cathode for providing a reducing atmosphere, a diaphragm, and an anode; the diaphragm defining an anode zone containing the anode, and a cathode zone containing the cathode, the contaminated solid material supply means, and the acidic substance or alkaline substance supply means; and the cathode zone being maintained in the reducing atmosphere and a strongly acidic or strongly alkaline atmosphere, and dissolution of heavy metal ions from the contaminated solid material, and separation of the dissolved heavy metal ions from the contaminated solid material and interstitial water being performed in parallel in the reaction vessel.

In a preferred embodiment, the reaction vessel is a slurry formation tank for bringing a mixture of the contaminated solid material, the acidic substance or alkaline substance, and water into a slurry state. The contaminated solid material supply means is desirably selected from a belt feeder, a slurry pump, etc., depending on the properties of the contaminated material. The contaminated solid material to be charged into the reaction vessel is desired to be beforehand converted into fine particles measuring several millimeters or smaller with the use of a dry or wet sieve such as a blade washer, a trommel or a vibrating screen, in order to facilitate the formation of the slurry in the reaction vessel. If the amount of the contaminated solid material charged into the reaction vessel is to be decreased, moreover, it is desirable to further sieve the contaminated solid material into a fine particle fraction measuring one millimeter or smaller with the use of a cyclone or the like. Preferably, the reducing atmosphere provided to the cathode zone is achieved by adjusting the cathode potential to -0.16V or less, preferably -0.25V or less, with respect to the hydrogen standard electrode. By adjusting the cathode potential to -0.16V or less, but -0.35V or more, for example, a reaction for electrolytic deposition of lead and cadmium can be produced. Since the deposition of iron contained in the slurry, and the generation of hydrogen by electrolysis of water are suppressed, on the other hand, the electrolytic deposition reaction of heavy metals can be produced somewhat specifically.

The adjustment of the cathode potential is preferably performed by using a constant potential power supply device, although this is not limitative. If the constant potential power supply device is used, the cathode potential can be controlled to a proper potential, and an electric current from the cathode to the anode occurs as a result of the electrolytic deposition reaction of the heavy metals. Upon completion of the electrolytic deposition of the heavy metals, the value of the electric current lowers. Thus, the observation of the current value makes it possible to confirm the completion of the electrolytic deposition reaction of the heavy metals, and to prevent the wastage of electricity due to an unnecessary electrolytic reaction. This is another advantage. Depending on the material for the cathode, there is a possibility that the component constituting the cathode will dissolve to generate an electric current in the opposite direction. Thus, it is desirable to adjust the cathode potential with the use of, for example, a constant potential power supply device. Alternatively, if the treatment is performed under constant conditions, and the relation between the current value and the electrolytic reaction is grasped, the occurrence of a cathode reaction on the cathode zone can be confirmed by measuring the current value between the electrodes and the positivity or negativity of this value.

According to the present invention in another embodiment, there is provided a contaminated solid material clarification apparatus comprising a slurry formation tank including a contaminated solid material supply means for supplying a contaminated solid material containing heavy metals, a cathode for providing a reducing atmosphere to a slurry containing at least the contaminated solid material, and a shearing force suppressing means for exercising control so as to decrease a shearing force of the slurry exerted on the surface of the cathode, and also maintain a state of contact between the cathode and the slurry, and wherein the slurry is maintained in the condition of the reducing atmosphere and a strongly acidic or strongly alkaline atmosphere in the slurry formation tank to deposit the heavy metals on the surface of the cathode.

In the present embodiment, the shearing force suppressing means is preferably a upward slurry flow providing means for giving the slurry an upward flow at a predetermined flow velocity. The upward slurry flow providing means preferably includes a slurry withdrawal port provided in an upper portion in the interior of the reaction vessel, a slurry introduction port provided at the bottom of the reaction vessel, and a circulating pump for circulating the slurry from the slurry withdrawal port to the slurry introduction port, and is arranged to raise the slurry from the bottom of reaction vessel at a desired speed. Alternatively, the shearing force suppressing means may be a flow controlling mechanism for controlling the slurry flow so as to reduce the shearing force of the slurry flow exerted on the cathode surface, and may be a flow controlling member composed of one or more materials selected from a plate material, a porous material, a honeycomb type material, and a network type material.

In the present embodiment, the cathode provides the reducing atmosphere to the slurry composed of the contaminated solid material containing heavy metals. To maintain the reducing atmosphere necessary for depositing the heavy metals on the cathode surface, it is preferred to adjust the electrode potential of the cathode to -0.16V or less, preferably -0.25V or less, with respect to the hydrogen standard electrode. Depending on the material constituting the cathode, the cathode may dissolve to generate an electric current in the opposite direction. Thus, it is preferred to use the cathode comprising a material which does not dissolve when a necessary reduction potential is applied. To apply the reduction potential necessary for the cathode, it is preferred to use a constant potential power source. If the heavy metals to be removed are lead and cadmium, in particular, the value of an electric current in a negative direction, which has occurred upon the deposition reaction of the heavy metals, decreases with the completion of the deposition reaction, by controlling the cathode potential to a proper potential with the use of the constant potential power source. Thus, the measurement of the current value provides the advantage of making it possible to know the completion of the electrolytic deposition reaction of the heavy metals, and to prevent wastage of electricity due to unnecessary electrolytic reaction. When the cathode potential is controlled in a range of -0.16V to -0.35V, for example, the electrolytic deposition reaction of lead and cadmium is produced. On the other hand, the deposition of iron contained in the slurry, and the generation of hydrogen by electrolysis of water are suppressed, so that the electrolytic deposition reaction of heavy metals can be produced specifically. This is another advantage. However, if the conditions for the treatment are constant, and the relation between the current value and the electrolytic reaction is grasped, the constant potential power source need not necessarily be used.

In the present invention, moreover, the dissolution and separation of the heavy metals from the contaminated solid material are completed in a single tank. In the solid-liquid separation step as post-treatment, therefore, there is no need to maintain the slurry in the reducing atmosphere.

In another embodiment, there is provided, according to the present invention, the contaminated solid material clarification apparatus having plural cathodes arranged therein. That is, the clarification apparatus is preferably the contaminated solid material clarification apparatus for clarifying the contaminated solid material containing heavy metals, comprising a container accommodating a slurry containing the solid contaminated material, a means for maintaining the slurry in strong acidity or strong alkalinity, and a means for adjusting the potential of the cathodes disposed in the container, thereby placing the slurry in a reducing atmosphere, and being arranged to perform, in parallel, the step of dissolving heavy metal ions into the slurry, and the step of depositing and separating the dissolved heavy metal ions from the slurry, and wherein plural cathodes are disposed in the container. Since the plurality of cathodes are disposed in the container, different roles can be allocated to these cathodes according to circumstances. Even if the action of one of the cathodes is out of order, or any one of them is replaced or subjected to maintenance, the operation of the apparatus can be continued.

Among the plural cathodes, preferably, at least one is a cathode for dissolution mainly acting to dissolve heavy metal ions, and at least one of the other cathodes is a cathode for deposition mainly acting to deposit the heavy metal ions. Since dissolution and deposition are performed by different cathodes, conditions suitable for the respective reactions can be set.

The cathode for deposition is preferably disposed at a position nearer to the anode than the cathode for dissolution. In this case, dissolution takes place at a higher potential in a lower potential range than that for the anode, and then deposition of the dissolved heavy metals takes place at a lower potential.

The cathode for deposition and the cathode for dissolution are preferably controlled to electrode potentials different from each other. By so doing, dissolution and deposition can be performed for the respective electrodes at potentials suitable for them.

The cathode for deposition and the cathode for dissolution preferably have physical properties different from each other. Preferably, the cathode for deposition and the cathode for dissolution are composed of substances having different standard electrode potentials, and a substance having a relatively high standard electrode potential is used as the cathode for deposition, while a substance having a relatively low standard electrode potential is used as the cathode for dissolution. Also preferably, the cathode for deposition is composed of a substance on which deposited heavy metals are electrodeposited more easily than a substance constituting the cathode for dissolution. By providing the respective cathodes with different physical properties required for deposition and dissolution, better actions and effects are obtained.

Preferably, the reducing atmosphere providing means usable in the present embodiment comprises the anode, the cathode for dissolution, and the cathode for deposition disposed in the slurry formation tank, and the cathode for deposition is located at a position closer to the anode than the cathode for dissolution. It is also preferred that outside air is shut off so as to bring the interior of the slurry formation tank into the reducing atmosphere.

The contaminated solid material is supplied into the slurry formation tank, and the reducing atmosphere is maintained by the reduction potential of the cathode for dissolution. At this time, there should desirably be a contrivance, such as increase of a distance, presence of a water flow from the cathode zone to the anode zone, or provision of a porous wall or a diaphragm, so that the reducing atmosphere on the cathode zone will not be impaired by the oxidizing atmosphere generated on the anode zone.

By adjusting the cathode for deposition potential to -0.16V or less, preferably -0.25V or less, with respect to a hydrogen standard electrode, lead (standard electrode potential -0.126V) and cadmium (standard electrode potential -0.40V) can be deposited on the surface of the cathode for deposition. The cathode for dissolution is desirably controlled to a potential equal to or higher than that of the cathode for deposition in order to avoid the deposition of heavy metals, if possible.

If the cathode for dissolution is operated at the same potential as that of the cathode for deposition, it is desirable to protect the electrode from the deposition of heavy metals by using different conducting materials, or adopting a shape which makes deposition difficult. For example, a carbon electrode does not bind to a metal. Thus, even if a low potential is given to deposit heavy metals on the surface of the carbon electrode, stirring or flowing, if any, moves the deposited solids of heavy metals away from the electrode, redissolves them by the reducing atmosphere, and eventually deposits them on the cathode for deposition. Depending on the materials constituting both cathodes, both cathodes are likely to dissolve and generate electric currents in opposite directions, so that care should be taken. Thus, it is desirable to control both cathodes to a potential of -0.16V or less with the use of a constant potential power supply device.

The occurrence of a reduction reaction on the cathode zone can be confirmed by measuring the value of a current between the electrodes and the positivity or negativity of this value. In this case, if the treatment is performed under constant conditions, and the relation between the current value and the electrolytic reaction is grasped, the use of the constant potential power supply device is not necessarily needed.

In the treatment of heavy metals, such as lead and cadmium, if the cathode potential is controlled to a proper potential with the use of a constant potential power source, the value of the electric current lowers upon completion of the deposition of the heavy metals. Thus, the observation of the current value makes it possible to confirm the completion of the deposition reaction of the heavy metals, and to eliminate the wastage of electricity due to an unnecessary electrolytic reaction. Thus, the results obtained are more preferred. If the cathode potential is controlled in a range of -0.16V to -0.43V, for example, the electrolytic deposition reaction of lead and cadmium is produced. On the other hand, the deposition of iron contained in the slurry, and the generation of hydrogen by electrolysis of water are suppressed. Thus, the electrolytic deposition reaction of heavy metals can be produced somewhat specifically.

As described above, heavy metals contained in the contaminated solid material are dissolved, recovered, and removed. In the present embodiment, the cathodes are characterized by being allocated, for different purposes, to that for dissolution and that for deposition. In the slurry formation tank, no matter how homogeneously stirring is performed, as the distance from the anode increases, the proton concentration actually decreases, forming a concentration gradient. The higher the proton concentration, the greater the current density, and the more easily heavy metals are deposited on the cathode.

Thus, at a position close to the anode, namely, at a position where deposition easily occurs, heavy metals are deposited on the cathode for deposition. On the other hand, at a position remote from the anode relative to that position, namely, at a position where deposition occurs with relative difficulty, heavy metals are dissolved of a sparingly soluble fraction of the contaminated solid material with the use of the cathode for dissolution.

Furthermore, materials suitable for different purposes are used for the cathode for deposition and the cathode for dissolution, whereby a further improvement in the removal effect can be achieved. It is preferred to use as noble a metal as possible for the cathode for deposition. Examples of materials used for cathode for deposition are gold, platinum, copper, palladium, and electrically conductive materials coated with these metals. On the other hand, there is no need to use noble materials for cathode for dissolution. Friction resistance, acid resistance, and alkali resistance are required of the material for cathode for dissolution. Examples are carbon, and surface-treated metals.

In a different embodiment, the present invention is the above-mentioned contaminated solid material clarification apparatus characterized in that the diaphragm is positioned so as to surround the anode, thereby forming the anode zone inwardly of the diaphragm and the cathode zone outwardly of the diaphragm. In the present embodiment, it is preferred that the diaphragm is unitized (diaphragm unit) using the diaphragm alone or a reinforcement, such as a frame material, for enhancing the strength of the diaphragm, the anode is positioned inside the diaphragm unit to define the anode zone, and the cathode is positioned outside the diaphragm unit to define the cathode zone. By using a combination of the diaphragm unit and the anode positioned in its inside (diaphragm-electrode unit), the following advantages can be obtained.

If the reaction vessel is upsized, plural diaphragm-electrode units are disposed within the reaction vessel, and the cathode is positioned around each of the diaphragm-electrode units. By so doing, the distance between the electrode and the diaphragm and/or the distance between the electrode and the reaction liquid (or slurry) can be easily rendered small, and the reaction rate and the efficiency of contaminant removal can be maintained. If the diaphragm or the diaphragm unit deteriorates because of fouling, decline in ion exchange ability, or cracking, the diaphragm-electrode unit is withdrawn from the reactor, whereby it can be easily repaired or replaced.

Preferred examples of the contaminated solid or liquid material which can be clarified by the present embodiment are contaminated solid or liquid materials containing heavy metals, such as soil, sludge, sediments, wastes, incineration ash, and slime, and contaminated liquid materials containing heavy metals, such as extracts from the above contaminated solid materials, industrial water, drainage, surface water, groundwater, and seawater. Preferred examples of the heavy metals to be separated and removed by the present invention are lead (Pb), cadmium (Cd), mercury (Hg), tin (Sn) and chromium (Cr).

The diaphragm used in the present embodiment is positioned between the cathode and the anode to separate the cathode zone and the anode zone. More concretely, the diaphragm is positioned to surround the anode, thereby forming the anode zone in the interior partitioned by the diaphragm, and the cathode zone in the exterior.

The diaphragm in the present embodiment refers to a diaphragm which has the function of controlling the movement of a substance other than particular ions in the slurry or the aqueous solution, which has the function of performing ion exchange to close the circuit between the anode and the cathode, and has the function of restricting permeation of a chlorine gas, an oxygen gas, dissolved chlorine, dissolved oxygen, etc. to maintain the reducing atmosphere of the cathode zone. A preferred example is a fluorocarbon resin-based ion exchange membrane (cation exchange membrane) having sulfonic acid groups. Sulfonic acid groups have hydrophilicity and have a high cation exchange ability. As more inexpensive diaphragms, fluorocarbon resin-based ion exchange membranes fluorinated only at the backbone, or aromatic hydrocarbon-based membranes can also be utilized. Preferred examples of such ion exchange membranes are commercially available products, such as NAFION produced by DuPont, NEPTON CR61AZL-389 produced by IONICS, NEOSEPTA CM-1 or CMB and ED-CORE produced by ASTOM Corporation, and Selemion CSV produced by Asahi Glass Co., Ltd. An anion exchange membrane can be used as the diaphragm for use in isolating the anode from the contaminated solid or liquid material. A hydroxide ion exchange membrane having ammonium hydroxide groups is preferred as the anion exchange membrane usable for such a purpose. Preferred examples of such an anion exchange membrane are commercially available products, such as NEPTON AR103PZL-389 produced by IONICS, NEOSEPTA AHA produced by ASTOM Corporation, and Selemion ASV produced by Asahi Glass Co., Ltd.

Further examples of the diaphragm usable in the present embodiment are those having no functional groups, including MF (microfilter) or UF (ultrafilter) membranes, porous filter media such as GORE-TEX (GORE-TEXR) membranes, ceramics and asbestos, and woven fabrics made of nylon, polyethylene, and polypropylene. These diaphragms without functional groups are preferably those having a pore diameter of 5 $\mu$m or less, and not permeable to gases under unpressurized conditions. Preferred examples are commercially available products, such as PE-10 membrane produced by Schweiz Seidengazefabrik, and NY1-HD membrane produced by Flon Industry.

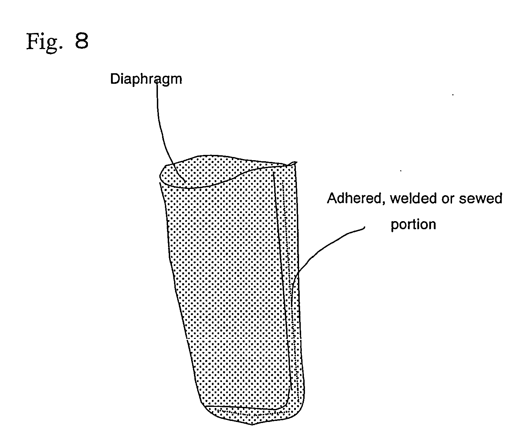

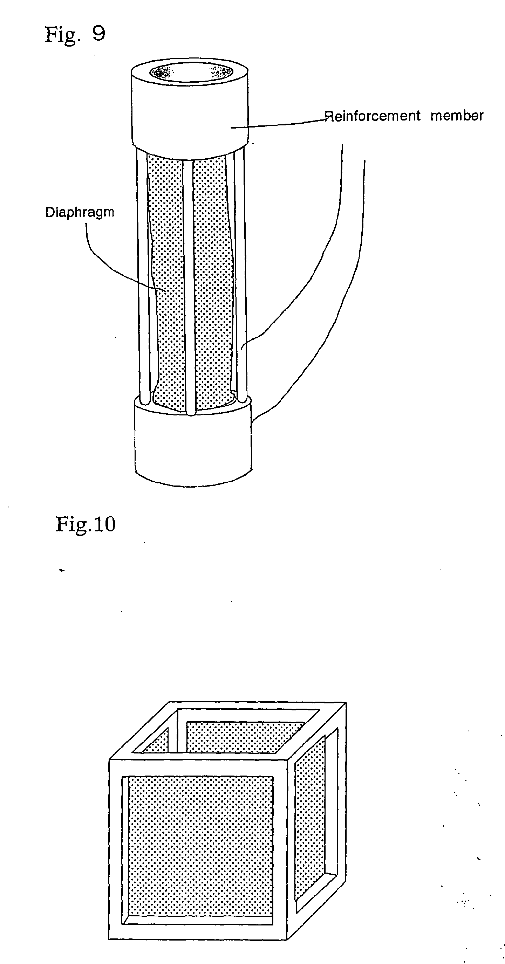

In the present embodiment, it is preferred to use any of these diaphragms alone or jointly with a reinforcement, such as a frame material, for enhancing the strength of the diaphragm, thereby forming a cylindrical, box-shaped or bag-shaped diaphragm unit having at least one end closed, and to put this diaphragm unit to use. Of the above-mentioned diaphragm materials, materials other than ceramics all have plasticity. Thus, flat-membrane-shaped materials are each formed into an arbitrary container shape, and can be made into a diaphragm unit by adhesion, welding or sewing (Fig. 8). To avoid the deformation or wearing of the diaphragm, it is desirable to reinforce the surface of the diaphragm with a network-shaped or perforated plate-shaped resin, or form or protect the corner, bottom or top of the diaphragm, in particular, with the use of a resin-made frame, plate or pipe (Fig. 9). In this case, the diaphragm itself need not have its bottom or side surface closed, but the diaphragm may be adhered or welded to the above protective material to form the unit. Of the above-mentioned diaphragms, the ED-CORE membrane produced by ASTOM Corporation is already in a cylindrical form, and thus can be used preferably. The ceramic is either formed into a container at a preceding stage of sintering, or even if it is a flat plate, is fixed to a polyhedral frame, whereby it can be used as a diaphragm unit (Fig. 10). However, the diaphragm-electrode unit need not necessarily be of a closed type, but may be configured to have the diaphragm surrounding the anode so that particles of the contaminated material containing heavy metals will not directly contact the anode.

The reducing atmosphere used in the present embodiment is preferably formed by the adjustment of the cathode potential. The adjustment of the cathode potential is preferably made such that the potential is -0.16V or less, more preferably -0.25V or less, with respect to the hydrogen standard electrode. The provision of the reducing atmosphere by the adjustment of the cathode potential can be performed by disposing the diaphragm between the anode and the cathode, in a combination of the anode, the diaphragm, a reference electrode, and the cathode. In this case, hydrogen ions are supplied from the anode zone via the diaphragm, thus providing the advantage that the necessity for supplying a large amount of an acid can be obviated.

The cathode usable in the present embodiment is desirably that having conductivity, and involving minimal loss resulting from friction with the slurry containing the solid or liquid contaminated material. Also desirable is a material having a higher standard electrode potential than that of heavy metals, and allowing heavy metals to deposit easily, or further, a material allowing the deposited heavy metals to be electrodeposited satisfactorily. Examples are noble metals such as copper, platinum, silver and gold, and materials coated with these metals.

In the present embodiment, the cathode is disposed around the diaphragm unit and, to increase the electrodeposition efficiency of heavy metals, the cathode desirably has as large a surface area as possible. Also, in order to make efficient use of hydrogen ions supplied from the anode zone, the cathode is desirably disposed as close to the diaphragm unit as possible, and is desirably structured not to hamper the movement of hydrogen ions, which pass through the diaphragm unit and come to diffuse, so that electrodeposition can take place on the entire surface of the cathode. The movement of the hydrogen ions from the anode zone to the cathode zone is not only necessary to maintain the charge balance between both zones during the electrolytic reaction and close the circuit, but also plays the role of lowering the hydroxide ion concentration which impedes the electrodeposition of heavy metals on the cathode surface.

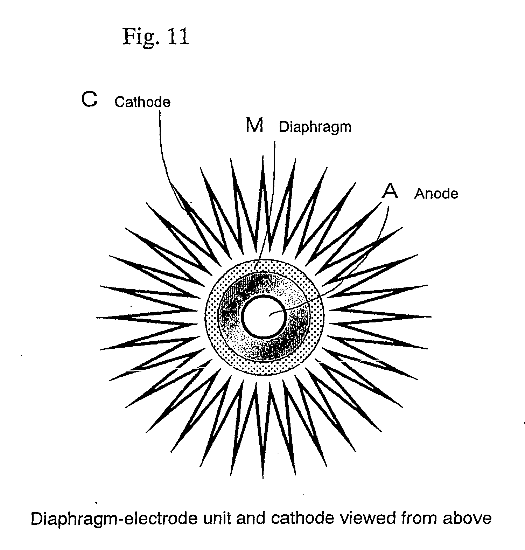

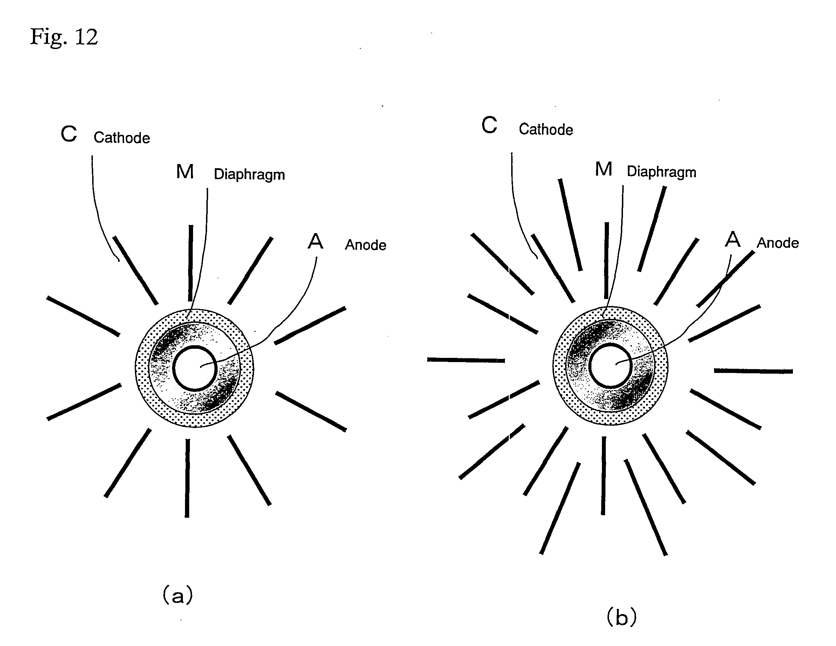

As a method of disposing the cathodes and the diaphragm-electrode unit which fulfills these conditions, a embodiment is desirable in which the cathodes are arranged in a star configuration so as to surround the periphery of the diaphragm-electrode unit disposed to enclose the anode at the center as shown in Fig. 11, or in which the cathodes are arranged radially around the diaphragm-electrode unit as shown in Figs. 12(a) and 12(b). The cathodes arranged radially may be in a single-row form as shown in Fig. 12(a), or in a plural-row form as shown in Fig. 12(b). In the illustrated embodiments, the edges of the star shape are sharp, but may be curved. There are no limitations on the number of folds of the star configuration, or on the number of radial lines of the radial configuration. The number of the folds and the number of the radial lines should be changed, as appropriate, according to the size of the apparatus, the properties of the contaminated material (the particle diameter particularly in the case of the contaminated solid material), the method of stirring the reaction liquid or slurry, or the intensity of stirring.

If the supply of hydrogen ions is sufficiently performed, and the feed rate of hydrogen ions does not become a rate-determining step for the deposition reaction of heavy metals, it is not necessary to adopt such a configuration.

The anode used in the present embodiment is preferably one having conductivity, having resistance in a strongly acidic (preferably, pH 3 or lower) or strongly alkaline (preferably, pH 12 or higher) aqueous solution, and having resistance to anode corrosion. Examples are furnace black, graphite, titanium, and titanium treated for corrosion protection (for example, ruthenium oxide-coated titanium). In the present embodiment, the anode is disposed inside the diaphragm unit. The distance between the anode and the diaphragm surface is desired to be as short as possible in order to supply hydrogen ions generated from the anode to the diaphragm surface efficiently (although their contact should be avoided, as will be stated later). Thus, the shape of the anode desirably corresponds to the shape of the diaphragm unit. For example, if the diaphragm unit is cylindrical, the anode is also preferably cylindrical. Moreover, since the anode is housed in the diaphragm unit, its surface area tends to be comparatively small relative to the cathode.

In order that the anode reaction does not become a rate-determining step because of the surface area of the anode, the anode should preferably be in an uneven form, a porous form, a network form, or a fibrous form for an increased surface area.

On the anode surface, an oxidation reaction proceeds owing to electrolysis. Thus, the anode surface and the diaphragm surface should desirably be out of contact in order to protect the diaphragm surface from oxidative corrosion. It is desirable to insert a certain non-conductive spacer between them, or to fix the anode by a certain method so that the anode does not come in contact with the diaphragm.

In a preferred embodiment, the reaction vessel is a stirring container which mixes the contaminated solid or liquid material and a mixture containing an acid or alkali and water by gas stirring or mechanical stirring, and brings the resulting mixture into contact with the cathodes. A gas used in the gas stirring is preferably a gas consisting essentially of an inert gas for example, nitrogen gas. It is also preferred to circulate the gas for utilization. When the gas is circulated, it is also preferred to supply a small amount of gas additionally over time, thereby bringing the circulation system into a pressurized state, and renew the gas gradually with the use of a back pressure regulating valve. Also preferred is a configuration in which outside air is shut off to impart a reducing atmosphere inside the apparatus.

The contaminated solid or liquid material is supplied into the apparatus, and the reducing atmosphere is maintained by a reduction potential applied to the cathodes by a reduction potential supply means located outside the container. The occurrence of a cathode reaction on the cathode zone can be confirmed by measuring the current value between the electrodes and the positivity or negativity of this value. Usually, a constant potential power source is used as the reduction potential supply means. However, if, in the present invention, the treatment is performed under constant conditions, and the relation between the current value and the electrolytic reaction is grasped, the use of the constant potential power source is not necessarily needed, but a constant current power source (rectifier), for example, may be used. In the treatment of heavy metals, such as lead and cadmium, however, if the cathode potential is controlled to a proper potential with the use of the constant potential power source, the value of the electric current lowers upon completion of the deposition of the heavy metals. Thus, the observation of the current value makes it possible to know the completion of the deposition reaction of the heavy metals, and to eliminate the wastage of electricity due to an unnecessary electrolytic reaction. Thus, the results obtained are more preferred. If the cathode potential is controlled in a range of -0.16V to -0.43V, for example, the electrolytic deposition reaction of lead and cadmium is produced. On the other hand, the deposition of iron contained in the reaction liquid, and the generation of hydrogen by electrolysis of water are suppressed. Thus, the electrolytic deposition reaction of heavy metals can be produced somewhat specifically.

The heavy metals in the contaminated material undergo dissolution and electrolytic deposition reactions in the reducing atmosphere by the cathodes, and they are separated and removed from the contaminated material. As stated above, the cathodes are arranged in a stellate or radial configuration around the diaphragm-electrode unit, and utilize hydrogen ions coming out through the diaphragm to proceed with dissolution and electrolytic deposition reactions. When the cathodes are arranged in a layered form with respect to the diaphragm, heavy metals converge at and are deposited on the cathodes nearer to the diaphragm and, in a configuration in which the cathodes cover the diaphragm, in particular, buildup of the heavy metals blocks or obstructs the flow of hydrogen ions from the diaphragm toward the cathodes. This leads to a decline in the efficiency of contact between the hydrogen ions and heavy metal ions in the reaction liquid, consequently bringing about a decrease in the efficiency of electrolytic deposition. Care should be taken to avoid this.

BRIEF DESCRIPTION OF THE DRAWINGS

[Fig. 1] Fig. 1 is a schematic explanation drawing showing a preferred embodiment of the present invention which uses an electrolytic deposition reaction to remove and recover lead, cadmium, etc.

[Fig. 2] Fig. 2 is a schematic explanation drawing showing another preferred embodiment of the present invention which uses an electrode reaction to remove and recover mercury, etc.
[Fig. 3] Fig. 3 is a schematic explanation drawing showing a preferred embodiment of the present invention, illustrating, in particular, a embodiment in which a cathode-protecting member is disposed in the vicinity of a cathode so that a shearing force due to solids of large particle diameters in a slurry will not act on the surface of the cathode.
[Fig. 4] Fig. 4 is a schematic explanation drawing showing another preferred embodiment of the present invention, illustrating, in particular, an embodiment in which a solid particle size distribution in the slurry is formed using an upward slurry flow, thereby suppressing a shearing force exerted on the cathode surface by solids of large particle diameters in the slurry.
[Fig. 5] Fig. 5 is a schematic explanation drawing showing a contaminated solid material clarification apparatus as a preferred embodiment of the present invention.
[Fig. 6] Fig. 6 is a schematic explanation drawing showing a contaminated solid material clarification apparatus as a preferred embodiment of the present invention.
[Fig. 7] Fig. 7 is a schematic explanation drawing showing a preferred embodiment of the present invention which dissolves lead, cadmium, etc. from a solid or liquid material contaminated with the use of a cathode, and electrolytically deposits them for recovery.
[Fig. 8] Fig. 8 is a conceptual view showing the form of a diaphragm for separating an anode zone and a cathode zone for use in the present invention.
[Fig. 9] Fig. 9 is a view showing an example of reinforcement using a frame and a pipe for protecting the bottom and top of the diaphragm to counter the deformation or wear of the diaphragm.
[Fig. 10] Fig. 10 is a view showing an example in which flat plates of a porous ceramic or the like are fixed to a polyhedral frame to be used as a diaphragm unit.
[Fig. 11] Fig. 11 is a view showing a preferred example of the arrangement of cathodes and a diaphragm-electrode unit which does not hamper the movement of hydrogen ions passing through the diaphragm unit to diffuse.
[Figs. 12(a) and 12(b)] Figs. 12(a) and 12(b) are views showing another preferred example of the arrangement of the cathodes and diaphragm-electrode unit which does not hamper the movement of hydrogen ions passing through the diaphragm unit to diffuse, Fig. 12(a) showing a case where the cathodes are arranged in a single row, and Fig. 12(b) showing a case where the cathodes are arranged in a plurality of rows.
[Fig. 13] Fig. 13 is a schematic view (side view) showing a 2000-liter rectangular reactor used in Examples 10 and 11.
[Fig. 14] Fig. 14 is a schematic view (plan view) showing the 2000-liter rectangular reactor used in Examples 10 and 11.
[Fig. 15] Fig. 15 is a schematic view (side view) showing a 2000-liter rectangular reactor used as a control system in Examples 10 and 11.
[Fig. 16] Fig. 16 is a schematic view (plan view) showing the 2000-liter rectangular reactor used as the control system in Examples 10 and 11.

DESCRIPTION OF THE NUMERALS AND SYMBOLS

1; 1A: 1B; 100: Clarification apparatus

2: Reaction vessel (slurry formation tank)
2a: Slurry formation section
2b: Separation section
3; 120: Solid-liquid separator

5: Heavy metal trap (gas cleaning bottle)

A: Anode

A-1: First anode
A-2: Second anode

C: Cathode

C-1a, C-1b: Dissolution cathode
C-2: Deposition cathode

M: Diaphragm

10: Anode zone
20: Cathode zone
22; 111: Contaminated solid material supply means
24; 112: Acidic substance or alkaline substance supply means
26; 115: Water supply means
27: Inert gas supply means (gas diffusion pipe)
28: pH meter electrode
34: Slurry pump
40: Liquid circulation line
50: Cathode-protecting member

PREFERRED EMBODIMENTS

With reference to the accompanying drawings, the present invention will be described in further detail. In the drawings, the same elements will be assigned the same reference numerals or symbols.

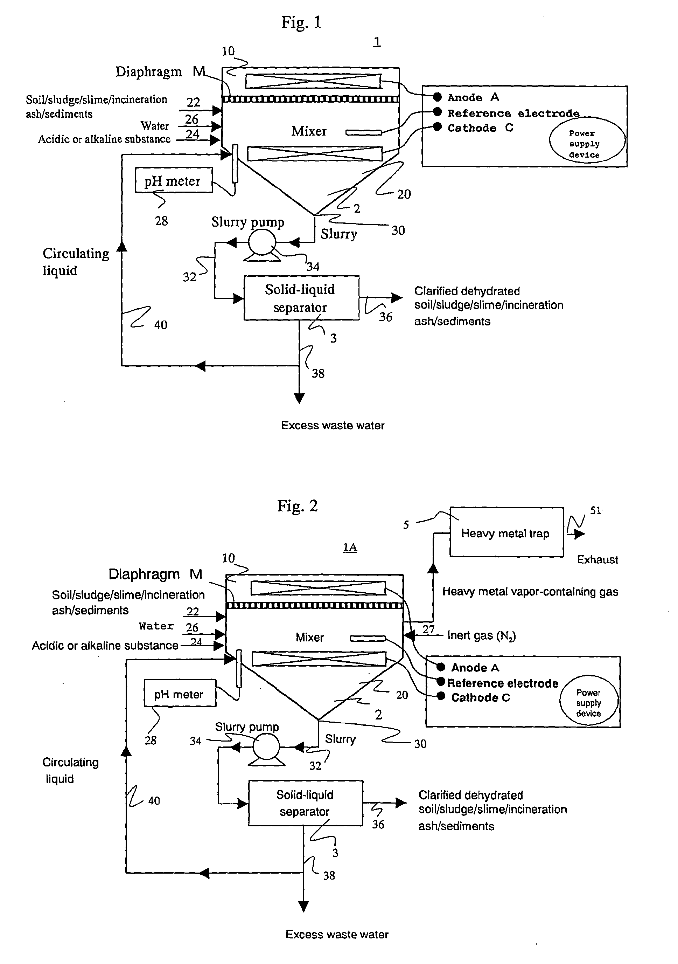

Fig. 1 is a schematic explanation drawing showing a preferred first embodiment of the present invention which uses an electrolytic deposition reaction to remove and recover lead, cadmium, etc.

A clarification apparatus 1 shown in Fig. 1 is a contaminated solid material clarification apparatus comprising a reaction vessel 2 including a contaminated solid material supply means 22 for supplying a contaminated solid material containing heavy metals, an acidic substance or alkaline substance supply means 24 for supplying an acidic substance or an alkaline substance, a cathode C for providing a reducing atmosphere, a diaphragm M, and an anode A; the diaphragm M defining an anode zone 10 containing the anode A, and a cathode zone 20 containing the cathode C, the contaminated solid material supply means 22, and the acidic substance or alkaline substance supply means 24; and the cathode zone 20 being maintained in the reducing atmosphere and a strongly acidic or strongly alkaline atmosphere, and dissolution of heavy metal ions from the contaminated solid material, and separation of the dissolved heavy metal ions from the contaminated solid material and interstitial water being performed in parallel in the reaction vessel 2.

The reaction vessel 2 is further provided with a water supply means 26 for supplying water to the cathode zone 20 of the reaction vessel 2, a pH meter 28 for measuring the pH of a mixture contained in the reaction vessel 2, and a slurry withdrawal port 30 for withdrawing a slurry as the mixture formed within the reaction vessel 2. A slurry transfer line 32, and a slurry pump 34 provided on the slurry transfer line 32 are connected to the slurry withdrawal port 30. The slurry transfer line 32 is connected to a solid-liquid separation device 3. A solid withdrawal line 36 for withdrawing separated solids, and a liquid withdrawal line 38 for withdrawing a separated liquid are connected to the solid-liquid separation device 3. A liquid circulation line 40 for returning part of the liquid, as a circulating liquid, to the reaction vessel 2 branches off from the liquid withdrawal line 38.

An embodiment of clarifying a solid material contaminated with heavy metals, using the clarification apparatus 1 will be described. First, a solid material contaminated with heavy metals, such as soil, sludge, slime, incineration ash, or sediments, is supplied to the reaction vessel (slurry formation tank) 2 via the contaminated solid material supply means 22. If, at this time, the contaminated solid material is in an unsaturated state, namely, the voids of the contaminated solid material are not saturated with water, a suitable amount of water is supplied via the water supply means 26 or the liquid circulation line 40 to achieve a saturated state. Within the slurry formation tank 2, the supplied contaminated solid material is stirred and, in some cases, water is mixed by stirring to form a slurry. With the pH of the slurry being measured using the pH meter 28, an acidic substance or an alkaline substance is added via the acidic substance or alkaline substance supply means 24 to adjust the pH of the slurry to 3 or lower or 12 or higher. With the oxidation-reduction potential of the slurry being measured, the oxidation-reduction potential of the cathode C is adjusted to -0.16V or lower with respect to a hydrogen standard electrode. In this state, heavy metals dissolve in the contaminated solid material e slurry, and are electrolytically deposited on the surface of the cathode C. At this time, the lower the electrode potential of the cathode C, the higher the rate of the electrolytic deposition reaction becomes. If the electrode potential is too low (e.g., about -0.6V or lower in the case of lead), however, the heavy metals do not form a dense film during electrolytic deposition, but the film, once formed, can be easily peeled under the shearing force of stirring. Thus, an appropriate electrode potential is selected depending on the conditions of the contaminated material or the apparatus.

Then, the slurry pump 34 is actuated to pressure-feed the slurry to the solid-liquid separator 3, where it is separated into a liquid and clarified dehydrated solids (solid dehydrated matter derived from soil, sludge, slime, incineration ash, or sediments). The separated solids are withdrawn via the solid withdrawal line 36, and can be handled as soil, sludge, slime, incineration ash or the like which has not been contaminated with the heavy metals. The separated liquid is withdrawn via the liquid withdrawal line 38, and then recycled to the slurry formation tank 2 via the liquid circulation line 40, or discharged as excess drain.

The heavy metals electrolytically deposited on the surface of the cathode C are either taken out of the system when the electrode is replaced. Alternatively, during the regeneration of the cathode, the electrode potential is transiently raised to about -0.1V, for example, whereby the heavy metals are dissolved from the surface of the electrode, and recovered as a heavy metal concentrate, which can be discarded as a heavy metal contaminant or can be recycled as heavy metal materials. If too high a potential (e.g., about 0.0V in the case of the copper electrode) is applied during regeneration of the electrode, the component of the electrode dissolves. Thus, it is desirable to set the electrode potential at a range where the component of the electrode does not dissolve, or to control the time of a high potential application to a short time.

Fig. 2 is a schematic view of a second embodiment of the present invention particularly suitable in a case where heavy metals contain mercury. A clarification apparatus 1A shown in Fig. 2 is of nearly the same configuration as that of the clarification apparatus shown in Fig. 1, but further comprises an inert gas supply means 27 for supplying an inert gas, such as a nitrogen gas, to the reaction vessel 2, and a heavy metal trap 55 for trapping heavy metals contained in a heavy metal vapor-containing gas. The heavy metal trap 5 is provided with an exhaust line 51 to discharge a gas after trapping and removal of the heavy metals by the heavy metal trap 5. As the heavy metal trap 5, it is possible to use a gas cleaning bottle containing a sulfuric acid-acidified aqueous solution of potassium permanganate, or use a gas treatment carrier having an oxidizing agent, such as a sulfur powder, carried thereon.

The embodiment of clarification of the contaminated solid material using the clarification apparatus 1A is nearly the same as the embodiment explained in connection with the clarification apparatus 1 shown in Fig. 1, except for the action of the heavy metal trap 5. Thus, only the action of the heavy metal trap 5 will be described below.

The present clarification apparatus 1A is suitable, particularly, for clarification of the contaminated solid material containing mercury. The contaminated solid material containing mercury is supplied into a slurry formation tank 2, and maintained in a reducing atmosphere and a strongly acidic or strongly alkaline atmosphere. As a result, heavy metals containing mercury dissolve in the contaminated solid material, and the mercury is reduced and vaporized. The vaporized mercury, accompanied by a hydrogen gas generated by the cathode and/or an inert gas, such as a nitrogen gas, supplied from the inert gas supply means 27 into the slurry formation tank 2, is transferred from the slurry into a gaseous phase, and trapped by the heavy metal trap 5. The trapped heavy metals, such as mercury, can be discarded as a heavy metal contaminant, or recycled as heavy metal materials.

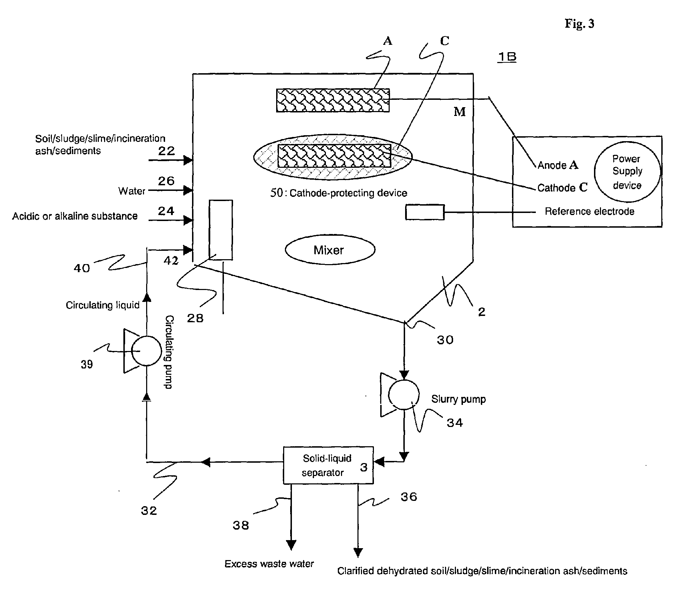

Fig. 3 is a schematic explanation drawing showing a preferred third embodiment of the present invention (an embodiment equipped with a shearing force suppressing means) which uses an electrolytic deposition reaction to remove and recover lead, cadmium, etc.

In Fig. 3, a clarification apparatus 1B comprises a slurry formation tank 2 including a contaminated solid material supply means 22 for supplying a contaminated solid material containing heavy metals, an acidic or alkaline substance supply means 24 for supplying an acidic or alkaline substance, a cathode C for providing a reducing atmosphere to a slurry containing at least the contaminated solid material and the acidic or alkaline substance, and a shearing force suppressing means for exercising control so as to decrease a shearing force exerted by the slurry on the surface of the cathode and maintain a state of contact between the cathode and the slurry.

In the illustrated embodiment, the slurry formation tank 2 further includes a water supply means 26 for supplying water to the slurry formation tank 2. A lower portion of the slurry formation tank 2 is formed in the shape of a funnel, and a slurry withdrawal port 30 is provided in a front end portion of the funnel-shaped lower portion. A slurry transfer line 32, and a slurry pump 34 provided on the slurry transfer line 32 are connected to the slurry withdrawal port 30. A solid-liquid separation device 3 is connected to the slurry transfer line 32 to separate the slurry into solid matter and liquid matter. A circulating pump 39 and a liquid circulation line 40 are connected to the solid-liquid separation device 3 to reintroduce the liquid matter, which has been separated by the solid-liquid separation device 3, as a circulating liquid, to a circulating liquid introduction port 42 provided at the upper end of the funnel-shaped lower portion of the slurry formation tank 2. A solid withdrawal line 36 for withdrawing the separated solids (clean dehydrated soil, sludge, slime, incineration ash, or sediments), and a liquid withdrawal line (drain) 38 for withdrawing the separated liquid as excess waste water are connected to the solid-liquid separation device 3.

Within the slurry formation tank 2, the cathode C for providing the reducing atmosphere to the slurry, an anode A, and a reference electrode B are located at an upper position in the slurry formation tank 2, and a pH meter 28 is provided for measuring the pH of the slurry. The cathode C, anode A and reference electrode B are connected to a power supply device placed outside the slurry formation tank 2 to be provided with a controlled applied potential. A cathode-protecting member 50 is attached to the cathode C so that solids of large particle diameters in the slurry will not exist in the vicinity of the cathode surface. The protecting member 50 is constructed of a nylon mesh (size of each opening: 1.5 mm).

Next, an embodiment of clarifying a solid contaminated material, contaminated with heavy metals, using the clarification apparatus 1B will be described.

First, a solid material contaminated with heavy metals, such as soil, sludge, slime, incineration ash, or sediments, is supplied to the slurry formation tank 2 via the contaminated solid material supply means 22. If, at this time, the contaminated solid material is in an unsaturated state, namely, the voids of the contaminated solid material are not saturated with water, a suitable amount of water is supplied via the water supply means 26 or the liquid circulation line 40 to achieve a saturated state. Within the slurry formation tank 2, the supplied contaminated solid material is stirred and, in some cases, water is mixed by stirring, to form a slurry. With the pH of the slurry being measured using the pH meter 28, an acidic substance or an alkaline substance is added via the acidic substance or alkaline substance supply means 24 to adjust the pH of the slurry to 3 or lower or 12 or higher. With the oxidation-reduction potential of the slurry being measured, the oxidation-reduction potential of the cathode C is adjusted to -0.16V or lower with respect to a hydrogen standard electrode. In this state, heavy metals dissolve in the contaminated solid material in the slurry, and are electrolytically deposited on the surface of the cathode C. At this time, the lower the electrode potential of the cathode C, the higher the rate of the electrolytic deposition reaction becomes. If the electrode potential is too low (e.g., about -0.6V or lower in the case of lead), however, the heavy metals do not form a dense film during electrolytic deposition, but the film, once formed, can be easily peeled under the shearing force of stirring. Thus, an appropriate electrode potential is selected depending on the conditions of the contaminated material or the apparatus.

The slurry lowers to the funnel-shaped lower portion of the slurry formation tank 2, while undergoing a stirring action by a stirring device. The cathode C located at the upper position within the slurry formation tank 2 is protected with the cathode-protecting member 50. Thus, the shearing force exerted by a slurry flow on the surface of the cathode C can be decreased to a low value.

When the observation of the current value shows a decline in the current value in the negative direction, it is confirmed that treatment within the slurry formation tank 2 has been completed. At this time, the slurry is pressure-fed to the solid-liquid separator 3, where it is separated into liquid and clarified dehydrated solids (solid dehydrated matter derived from soil, sludge, slime, incineration ash, or sediments). The separated solids are withdrawn via the solid withdrawal line 36, and can be handled as soil, sludge, slime, incineration ash or the like which has not been contaminated with the heavy metals. The separated liquid is either recycled to the slurry formation tank 2 via the liquid circulation line 40, or withdrawn via the liquid withdrawal line 38, and discharged as excess drain.

The heavy metals electrolytically deposited on the surface of the cathode C may be taken out of the system by replacing the electrode. Alternatively, as a method of regenerating the electrode, the electrode potential may be transiently raised to a value of the order of -0.1V, for example, whereby the heavy metals may be dissolved from the surface of the cathode C to form a heavy metal concentrate, which may be recovered. If too high a potential (e.g., about 0.0V in the case of the copper electrode) is applied during regeneration of the electrode, the material constituting the electrode dissolves per se. Thus, the electrode potential is adjusted to a potential in an appropriate range, or the time of high potential application is rendered short. The recovered heavy metals are discarded as a heavy metal contaminant, or may be recycled as heavy metal materials.

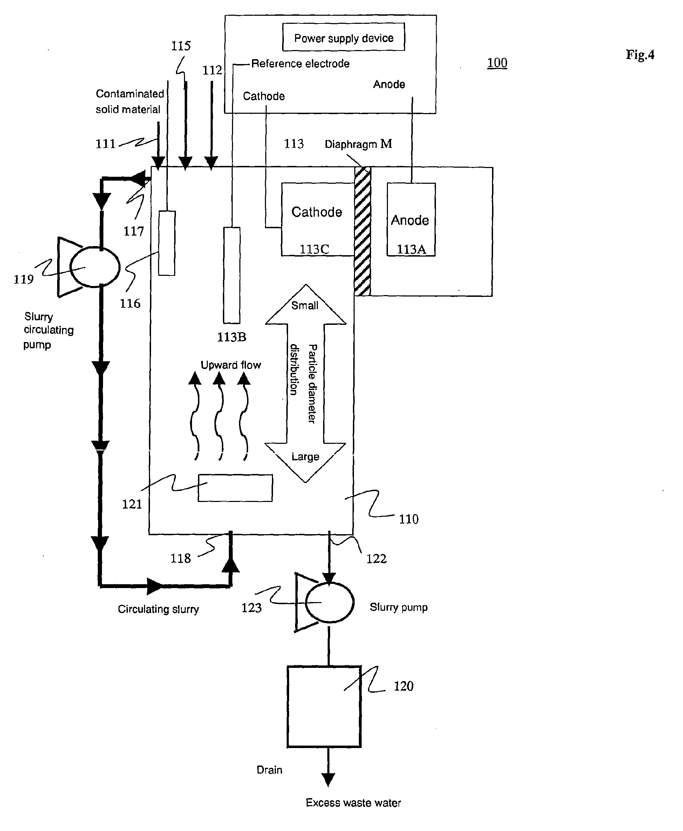

Fig. 4 is a schematic explanation drawing showing another embodiment for the shearing force suppressing means. A clarification apparatus 100 shown in Fig. 4 comprises a slurry formation tank 110 including a contaminated solid material supply means 111 for supplying a contaminated solid material containing heavy metals, an acidic or alkaline substance supply means 112 for supplying an acidic or alkaline substance, a cathode 113C for providing a reducing atmosphere to a slurry containing at least the contaminated solid material and the acidic or alkaline substance, and a shearing force suppressing means for exercising control so as to decrease a shearing force exerted by the slurry on the surface of the cathode and maintain a state of contact between the cathode and the slurry.

In the present clarification apparatus 100, the reducing atmosphere is provided to the slurry by the cathode 113C disposed within the slurry formation tank 110, an anode 113A, a cathode controlling reference electrode (hydrogen standard electrode) 113B, and an external power supply device for controlling applied voltages of the cathode 113C, the anode 113A and the reference electrode 113B. The reference electrode 113B is disposed in the vicinity of the electrode to be controlled (cathode). In the illustrated embodiment, an electrolytic membrane (diaphragm) M is positioned between the cathode 113C and the anode 113A to weaken contact between the anode 113A and the slurry. The cathode 113C, the anode 113A, the electrolytic membrane M, and the reference electrode 113B are located at an upper position within the slurry formation tank 110.

The slurry formation tank 110 is furnished with a pH meter 116 for monitoring the maintenance of the slurry in a strongly acidic atmosphere or a strongly alkaline atmosphere. The illustrated slurry formation tank 110 also includes a water supply means 115 for supplying water which, in some cases, becomes necessary to form the slurry. A treated slurry withdrawal port 122 for withdrawing the slurry after treatment is provided at the bottom of the slurry formation tank 110. A slurry pump 123 for withdrawing the treated slurry, and a solid-liquid separation device 120 are connected to the treated slurry withdrawal port 122. A circulating liquid supply means (not shown) for recycling treated water, obtained by solid-liquid separation, to the slurry formation tank 110 is connected to the solid-liquid separation device 120.

In the illustrated embodiment, the shearing force suppressing means includes a slurry withdrawal port 117 provided in an upper portion of the slurry formation tank, a slurry introduction port 118 provided at the bottom of the tank, and a circulating pump 119 for circulating the slurry from the slurry withdrawal port 117 to the slurry introduction port 118, and is arranged to raise the slurry from the bottom of the tank at a desired speed and provide a desired solid slurry particle size distribution within the slurry formation tank 110.

A stirring device 121 is provided in a lower portion of the slurry formation tank 110 to sufficiently stir the slurry, which has been introduced through the slurry introduction port 118 into the slurry formation tank 110, thereby rendering constant the heavy metal ion concentration in the slurry at the horizontal level in the slurry formation tank.

Next, a preferred embodiment of clarifying a solid contaminated material, contaminated with heavy metals, using the clarification apparatus 110 will be described.

First, a solid material contaminated with heavy metals, such as soil, sludge, slime, incineration ash, or sediments, is supplied to the slurry formation tank 110 via the contaminated solid material supply means 111. If, at this time, the contaminated solid material is in an unsaturated state, namely, the voids of the contaminated solid material are not saturated with water, a suitable amount of water is supplied via the water supply means 115 or the circulating liquid supply means (not shown) to achieve a saturated state. The contaminated solid material supplied into the slurry formation tank 110 is stirred and, in some cases, water and/or the circulating liquid are mixed by stirring, to form a slurry. With the pH of the slurry being measured using the pH meter 116, an acidic substance or an alkaline substance is supplied via the acidic or alkaline substance supply means 112 to adjust the pH of the slurry to 3 or lower or 12 or higher. With the oxidation-reduction potential of the slurry being measured, the oxidation-reduction potential of the cathode 113C is adjusted to -0.16V or lower with respect to the hydrogen standard electrode 113B.

By the operation of the circulating pump 119, the resulting slurry flows as an upward flow within the slurry formation tank 110, is withdrawn via the slurry withdrawal port 117 in the upper portion of the slurry formation tank 110, reintroduced into the slurry formation tank 110 via the slurry introduction port 118, and flows as an upward flow again. The speed of the upward flow of the slurry is adjusted by the circulating pump 119.

In the slurry flowing as the upward flow within the slurry formation tank 110, a reducing atmosphere and a strongly acidic or strongly alkaline atmosphere are maintained, with the result that heavy metals from the contaminated solid material dissolve and are electrolytically deposited on the surface of the cathode 113C. At this time, the lower the cathode potential, the higher the rate of the electrolytic deposition reaction becomes. If the cathode potential is too low (e.g., about -0.6V or lower in the case of lead), however, the electrolytically deposited heavy metals do not form a dense film, but the film becomes easily peeled. Thus, the cathode potential is adjusted to an appropriate range.

The slurry formed into an upward flow is flowed within the slurry formation tank 110, whereby solids of large particle diameters are present in a lower portion of the slurry formation tank 110, while solids of small particle diameters flow in an upper portion of the slurry formation tank 110. Thus, the slurry containing solids of small particle diameters flow in the neighborhood of the cathode 113C located at the upper position within the slurry formation tank 110, so that a shearing force exerted by solids of large particle diameters on the surface of the cathode 113C is precluded. Thus, the heavy metals electrolytically deposited on the surface of the cathode 113C do not undergo the influence of the shearing force by the slurry, particularly, by the solids of large particle diameters in the slurry, but can be deposited satisfactorily.

When the observation of the current value shows a decline in the current value in the negative direction, it is confirmed that treatment within the slurry formation tank 110 has been completed. Then, the slurry pump 123 is actuated to withdraw the treated slurry through the treated slurry withdrawal port 122 for its pressure-feeding to the solid-liquid separation device 120. In the solid-liquid separation device 120, the treated slurry is separated into an aqueous solution and clarified dehydrated solids (solid dehydrated matter derived from soil, sludge, slime, incineration ash, or sediments). The separated solids may be handled as soil, sludge, slime, or incineration ash which has not been contaminated with the heavy metals. The separated aqueous solution is recycled to the slurry formation tank 110 as a circulating liquid for its reuse, or may be discharged to the outside of the system as an excess liquid.

The post-treatment of the heavy metals electrolytically deposited on the surface of the cathode 113C can be performed as explained in connection with the apparatus of Fig. 3.

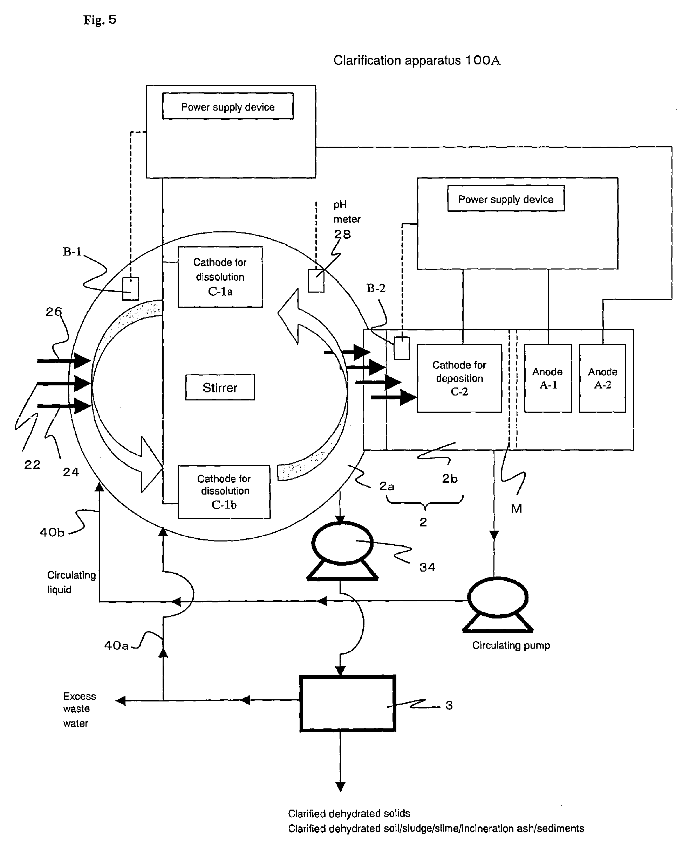

Fig. 5 is a schematic explanation drawing showing a fifth preferred embodiment of the present invention which uses electrolytic dissolution and electrolytic deposition reactions to remove and recover lead, cadmium, etc. A clarification apparatus 100A shown in Fig. 5 comprises a clarification reaction vessel 2 including a contaminated solid material supply means 22 for supplying a contaminated solid material containing heavy metals, an acid or alkali supply means 24 for supplying an acid or an alkali, and a reducing atmosphere providing means for providing a reducing atmosphere. The clarification reaction vessel 2, in the present example, is composed of an upstream slurry formation section 2a and a downstream separation section 2b. In this example, the slurry formation section 2a is a vessel of a circular cross section, and the separation section 2b is a rectangular vessel of a smaller width than the slurry formation section 2a. The reducing atmosphere providing means comprises a first anode A-1 and a second anode A-2 disposed within the separation section 2b, a cathode for dissolution control reference electrode B-1 and a pair of cathode for dissolutions C-1a and C-1b disposed in the slurry formation section 2a, and a cathode for deposition control reference electrode B-2 and a cathode for deposition C-2 disposed between the first anode A-1 and the cathode for dissolutions C-1a and C-1b. There are also provided a first power supply device for applying a dissolution potential between the cathode for dissolutions C-1a, C-1b and the second anode A-2, and a second power supply device for applying a deposition potential between the cathode for deposition C-2 and the first anode A-1.

The reference electrodes B-1 and B-2 are each disposed in the vicinity of the electrode to be controlled thereby. The slurry formation section 2a is desirably furnished with a device for homogenizing the slurry inside it, for example, a stirrer. Further, the slurry formation section 2a may be provided with a water supply means 26 for supplying water, and a circulating liquid supply means 40a for reusing treated water after solid-liquid separation. A pH meter electrode 28 for measuring the pH of the slurry is inserted into the clarification reaction vessel 2. A solid-liquid separation device 3 for solid-liquid separation of the slurry formed in the clarification reaction vessel 2, and a slurry pump 34 for slurry transport may be installed. In order that the reducing atmosphere on the cathode zone is not impaired by the oxidizing atmosphere generated on the anode zone, a measure may be taken, such as the placement of the cathode zone and the anode zone at spaced apart locations, the presence of a water flow from the cathode zone to the anode zone, or the provision of a porous wall or a diaphragm M. In this example, a circulating pump for returning the liquid from the separation section 2b to the slurry formation section 2a is provided.

A method of clarifying a solid contaminated material, contaminated with heavy metals, using the clarification apparatus 100A will be described. First, a solid material contaminated with heavy metals, such as soil, sludge, slime, incineration ash, or sediments, is supplied to the clarification reaction vessel 2 via the contaminated solid material supply means 22. If, at this time, the contaminated solid material is in an unsaturated state, namely, the voids of the contaminated solid material are not saturated with water, a suitable amount of water is supplied via the water supply means 26 or the circulating liquid supply means 40b to achieve a saturated state.

Within the slurry formation section 2a of the clarification reaction vessel 2, the supplied contaminated solid material is stirred and, in some cases, water and/or the circulating liquid are or is mixed with stirring, to form a slurry. With the pH of the slurry being measured using the pH meter electrode 28, an acid or an alkali is added via the acid or alkali supply means 24 to adjust the pH of the slurry to 3 or lower or 12 or higher. With the oxidation-reduction potential of the slurry being measured, the oxidation-reduction potentials of the cathode for dissolutions C-1a, C-1b and the cathode for deposition C-2 are adjusted to -0.16V or lower with respect to the hydrogen standard electrodes.

In this state, heavy metals of the contaminated solid material dissolve into the slurry, and then electrolytically deposit on the surface of the cathode for deposition C-2. At this time, the lower the potential, the higher the rate of the electrolytic deposition reaction becomes. If the potential is too low (e.g., about -0.6V or lower in the case of lead), however, the heavy metals do not form a dense film during electrolytic deposition, but the film, once formed, becomes easily peeled. Thus, an appropriate potential should be selected depending on the conditions of the contaminated material or the apparatus.

Then, the slurry is pressure-fed to the solid-liquid separator 3 by means of the slurry pump 34 to be separated into an aqueous solution and clarified dehydrated solids (solid dehydrated matter derived from soil, sludge, slime, incineration ash, or sediments). The separated solids can be handled as soil, sludge, slime, incineration ash or the like which has not been contaminated with the heavy metals. The separated aqueous solution is either recycled as a circulating liquid, or drained as an excess liquid.

The heavy metals electrolytically deposited on the surface of the cathode for deposition C-2 are usually taken out of the system by replacing the electrode. Alternatively, as a method of regenerating the cathode for deposition C-2, the cathode for deposition potential is transiently raised to a value of the order of -0.1V, for example, whereby the heavy metals are dissolved from the surface of the cathode for deposition C-2 to form a heavy metal concentrate, which is recovered. This heavy metal concentrate is discarded as a heavy metal contaminant, or can be recycled as heavy metal materials. If, at this time, too high a potential (e.g., about 0.0V in the case of the copper electrode) is applied to the cathode for deposition C-2, the material constituting the cathode for deposition C-2 dissolves per se. Thus, it is desired that the potential for regeneration of the cathode for deposition C-2 be set in a range where the cathode for deposition material does not dissolve, or the time of high potential application be controlled to a short time. If a pair of the cathode for depositions C-2 are provided, and one of them is taken out alternately, the operation of the apparatus can be performed continuously.

In the embodiment illustrated in Fig. 5, the reaction vessel 2 is composed of the slurry formation vessel 2a of a circular cross section, and the slurry separation vessel 2b of a rectangular cross section, the stirrer is positioned at the center of the slurry formation vessel 2a, and the contaminated solid material supply means 22, the acid or alkali supply means 24, and the water supply means 26 are provided at a position diametrically opposed to the entrance to the slurry separation vessel 2b. Thus, the solid contaminated material, the acidic or alkaline substance, and water supplied into the slurry formation vessel 2a are stirred and rotated in the circumferential direction, and carried away toward the slurry separation vessel 2b. Hence, the velocity of the carry-away flow in the 2b section is controlled by the circulating pump to be lower than the above-mentioned circumferential rotational speed. By so doing, the shearing force on the cathode for deposition in the 2b section can be suppressed, with the contact with the cathode for dissolutions and the efficiency of dissolution in the 2a section being maintained.

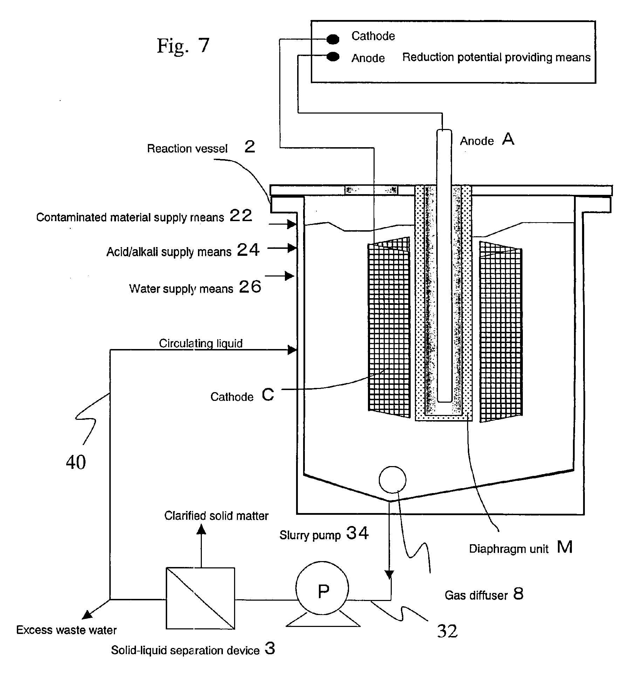

Fig. 7 is a schematic explanatory drawing showing a sixth preferred embodiment of the present invention which uses electrolytic dissolution and electrolytic deposition reactions to remove and recover heavy metals. A reaction vessel 2 shown in Fig. 7 is a contaminated solid or liquid material clarification apparatus comprising a slurry or contaminated material supply means 22 for supplying a contaminated solid or liquid material containing heavy metals, an acid or alkali supply means 24 for supplying an acid or an alkali, a cathode C present in the reaction vessel 2 and in contact with the slurry or liquid, a cylindrical, box-shaped or bag-shaped diaphragm unit M disposed in the reaction vessel 2 and closed at the bottom thereof, an anode A disposed in the interior of the diaphragm unit M, and a reduction potential providing means for providing a reduction potential to the cathode C. In the reaction vessel 2, it is desirable to provide a gas diffuser 8 or the like as a device for controlling a reaction liquid inside it. Further, there may be provided a water supply means 26 for supplying water, and a circulating liquid supply means (slurry transport line 32, slurry pump 34, solid-liquid separation device 3, circulating liquid transport line 40) for reusing treated water after solid-liquid separation.

A method of clarifying a solid or liquid contaminated material, contaminated with heavy metals, using the reaction vessel 2 will be described. First, a solid or liquid material contaminated with heavy metals, such as soil, sludge, slime, incineration ash, sediments, industrial water, surface water, groundwater, or seawater, is supplied to the reaction vessel 2 via the contaminated solid or liquid material supply means 22. If, at this time, the contaminated solid or liquid material is in an unsaturated state, namely, the voids of the contaminated solid material are not saturated with water, a suitable amount of water is supplied via the water supply means 26 or the circulating liquid supply means (32, 34, 3, 40) to achieve a saturated state. Within the reaction vessel 2, the supplied contaminated solid or liquid material is stirred and, in some cases, water and/or the circulating liquid are or is mixed by stirring, to form a slurry or solution. With the pH of the slurry being measured using a pH meter (not shown), an acid or an alkali is added via the acid or alkali supply means 24 to adjust the pH of the slurry to 3 or lower or 12 or higher. Using the reduction potential providing means, a reduction potential is applied such that the potential of the cathode C is -0.16V or lower with respect to the hydrogen standard electrode, or the current density is +0.01 to +10A/L of the reactor. The optimal cathode potential or current density varies greatly according to the concentration of the contaminant or the shape of the apparatus, so that an appropriate applied potential is selected according to the conditions.

After completion of electrolytic dissolution and deposition reactions, the slurry is pressure-fed to the solid-liquid separator 3 by means of the slurry pump 34 to be separated into an aqueous solution and clarified dehydrated solids (solid dehydrated matter derived from soil, sludge, slime, incineration ash, or sediments). If the contaminated material is a liquid, the solid-liquid separation step is not necessary. The separated solids can be handled as soil, sludge, slime, incineration ash or the like which has not been contaminated with the heavy metals. The separated aqueous solution is either recycled as a circulating liquid, or drained as an excess liquid. The heavy metals electrolytically deposited on the surface of the cathode for deposition C are usually taken out of the system by replacing the electrode. Alternatively, as a method of regenerating the cathode for deposition C, the cathode for deposition potential may be transiently raised to a value of the order of -0.1V, for example, whereby the heavy metals may be dissolved from the surface of the cathode for deposition C to form a heavy metal concentrate, which may be recovered. The heavy metal concentrate can be discarded as a heavy metal contaminant, or recycled as heavy metal materials. If, at this time, too high potential (e.g., about 0.0V in the case of the copper electrode) is applied, the material for the cathode for deposition dissolves per se. Thus, it is desired that the potential for regeneration of the cathode for deposition be set in a range where the cathode for deposition material does not dissolve, or the time of high potential application be controlled to a short time.

Examples

Hereinbelow, the present invention will be described in further detail by Examples, but is in no way limited by these Examples. The test material used in these Examples is soil containing predetermined concentrations of heavy metals, the soil being prepared by incorporating heavy metals into soil collected from within the premises of various plants.

[Example 1] Electrolytic deposition and removal test on lead-contaminated soil

As shown in Fig. 1, a cation exchange membrane (NEOSEPTA CMB, Tokuyama Corp.) was installed at the center of a 2000 mL PLEXIGLAS reactor to divide the reactor into two portions, creating a cathode zone and an anode zone.

In the cathode zone, 100 g of sparingly water-soluble lead-contaminated soil (lead content 5,000 mg/kg dry soil; site of collection: A paint factory), 800 mL of tap water, and 50 mL of 1:1 hydrochloric acid were added, and stirred at a speed of 500 rpm with a Teflon (registered trademark) agitating blade to establish a test system.

A cathode as a copper wire netting was inserted into the test system, and connected to an anode via a potentiostat (constant potential power supply device).

In the anode zone, 800 mL of tap water and 5 mL of 1:1 hydrochloric acid were added, and an anode of graphite was inserted.

A reference electrode was inserted into the cathode zone, and the potentiostat was adjusted such that the cathode potential would be -0.25V with respect to a hydrogen standard electrode potential. After the cathode potential reached -0.25V, an operation was performed for 20 minutes. Then, a slurry within the reactor was suction filtered using a GF/B filter paper to carry out solid-liquid separation. During the reaction time, the pH of the slurry in the cathode zone was maintained at 1.0 or lower. After suction filtration, the lead concentration in the filtrate and the lead content of the soil after filtration were measured by the atomic absorption method. Using the same experimental apparatus, a control system set to have a cathode potential of 0.0V with respect to the hydrogen standard electrode potential was similarly subjected to suction filtration and solid-liquid separation, followed by measuring the lead concentrations in the filtrate and the soil after filtration. The results are shown in Table 1.

[Table 1]

Table 1 Results of electrolytic deposition and removal test on lead-contaminated soil

| Experimental system (cathode potential V) | Liquid phase lead dissolution concentration (rate of weight distribution into liquid phase %) | Concentration of lead remaining in soil (rate of weight distribution into soil %) | (Rate of weight distribution onto electrode %)* |
|---|---|---|---|
| Test system (-0.25V) | 0.05 mg/L (0.01 %) | 52 mg/kg (1.0%) | (98.9%) |
| Control system (0.0V) | 173 mg/L (43.4%) | 2349 mg/kg (46.8%) | (9.8%) |
| * Rate of lead weight distribution onto electrode was determined by subtraction from the lead weight in the soil added. | | | |

Table 1 shows that the slurry containing the heavy metal-containing contaminated solid material was maintained in a strongly acidic atmosphere and a reducing atmosphere, whereby more than 98% of the sparingly soluble lead adhering to the soil was deposited on the cathode, and removed from the soil and interstitial water.

[Example 2] Electrode reduction cleaning test on mercury-contaminated sediments

As shown in Fig. 2, a cation exchange membrane (NEOSEPTA CMB, Tokuyama Corp.) was installed at the center of a 2000 mL PLEXIGLAS reactor to divide the reactor into two portions, creating a cathode zone and an anode zone.

In the cathode zone, 100 g of sparingly water-soluble mercury-contaminated sediments (total mercury content 125 mg/kg dry soil; site of collection: B drug plant), 800 mL of tap water, and 50 mL of 1:1 hydrochloric acid were added, and stirred at a speed of 500 rpm with a Teflon (registered trademark) agitating blade. A diffuser pipe for a nitrogen gas was inserted to expose the cathode zone to nitrogen at a rate of 10 mL/min. In this manner, a test system was established.

A cathode as a titanium wire netting was inserted into the test system, and connected to an anode via a potentiostat. To trap the gas discharged from the cathode zone, a gas cleaning bottle incorporating 100 mL of 1:4 sulfuric acid containing potassium permanganate (50 g/L) was connected to the reactor.

In the anode zone, 800 mL of tap water and 5 mL of 1:1 hydrochloric acid were added, and an anode of graphite was inserted.

A reference electrode was inserted into the cathode zone, and the potentiostat was adjusted such that the cathode potential would be -0.46V with respect to a standard hydrogen electrode potential. After the cathode potential reached -0.46V, an operation was performed for 20 minutes. Then, a slurry within the reactor was suction filtered using a GF/B filter paper to carry out solid-liquid separation. The pH in the cathode zone was maintained at 1.0 or lower. The gas from the reactor was trapped by the gas cleaning bottle as a heavy metal trap. After suction filtration, the total mercury concentration in the filtrate and the mercury content of the sediments after filtration were measured by the heated vapor atomic absorption method. The concentration of mercury trapped in the gas cleaning bottle was measured by the atomic absorption method.

Using the same experimental apparatus, a control system set to have a cathode potential of +0.2V with respect to the hydrogen standard electrode potential was similarly subjected to suction filtration and solid-liquid separation, followed by measuring the mercury concentrations in the filtrate, in the sediments after filtration, and in the gas cleaning bottle. The results are shown in Table 2.

[Table 2]

Table 2 Results of dissolution test on mercury-contaminated sediments

| Experimental system (cathode potential V) | Liquid phase mercury dissolution concentration (rate of weight distribution into liquid phase %) | Concentration of mercury remaining in sediments (rate of weight distribution into sediments %) | Concentration of mercury trapped in gas cleaning bottle (rate of weight distribution into gas phase %)* |
|---|---|---|---|
| Test system (-0.46V) | 0.03 mg/L (0.03%) | 1.0 mg/kg (0.8%) | 124 mg/L (99.2%) |
| Control system (+0.2V) | 10 mg/L (64%) | 16 mg/kg (12.8%) | 29 mg/L (23.2%) |

Table 2 shows that 99% of the sparingly soluble mercury adhering to the sediments was removed from the sediments and interstitial water by applying a reduction potential under acidic conditions.

[Example 3] Influence of diaphragm on electrolytic deposition and removal of lead-contaminated soil

As shown in Fig. 1, a cation exchange membrane (NEOSEPTA CMB, Tokuyama Corp.) was installed at the center of a 2000 mL PLEXIGLAS reactor to divide the reactor into two portions, creating a cathode zone and an anode zone. In the cathode zone, 100 g of sparingly soluble lead-contaminated soil (lead content 5,000 mg/kg dry soil; site of collection: A paint factory), 800 mL of tap water, and 50 mL of 1:1 hydrochloric acid were added, and stirred at a speed of 500 rpm with a Teflon (registered trademark) agitating blade to establish a test system. A cathode as a copper wire netting was inserted into the test system, and connected to an anode via a potentiostat (constant potential power supply device). In the anode zone, 800 mL of tap water and 5 mL of 1:1 hydrochloric acid were added, and an anode made of ruthenium oxide-coated titanium was inserted.

A reference electrode was inserted into the cathode zone, and the potentiostat was adjusted such that the cathode potential would be -0.25V with respect to a hydrogen standard electrode potential. After the cathode potential reached -0.25V, an operation was performed for 20 minutes. Then, a slurry within the reactor was centrifuged to carry out solid-liquid separation. During the reaction time, the pH of the slurry in the cathode zone was maintained at 1.0 or lower.

After centrifugation, the lead concentration in the liquid phase and the lead content of the soil were measured by the atomic absorption method.

Using the same experimental apparatus, control systems deprived of the diaphragm and having the cathode solution and the anode solution mixed therein were subjected to an operation for 20 minutes under constant-potential control at a cathode potential of -0.25V (control system 1), or under constant-current control at 1A/L reaction liquid (control system 2), and similarly centrifuged, whereafter the lead concentrations in the liquid phase and the soil were measured. The results are shown in Table 3.

[Table 3]

Table 3 Results of test on influence of diaphragm on electrolytic deposition and removal of lead-contaminated soil

| Experimental system (potential/current control conditions) | Liquid phase lead dissolution concentration (rate of weight distribution into liquid phase %) | Concentration of lead remaining in soil (rate of weight distribution into soil %) | (Rate of weight distribution onto electrode %)* |
|---|---|---|---|
| Test system (-0.25V) | 0.04 mg/L (0.01%) | 54 mg/kg (1.1%) | (98.9%) |
| Control system 1 (-0.25V) | 22 mg/L (8.8%) | 4128 mg/kg (83%) | (8.2%) |
| Control system 2 (1A/L) | 1 mg/L (0.4%) | 3614 mg/kg (72%) | (27.6%) |
| * Rate of lead weight distribution onto electrode was determined by subtraction from the lead weight in the soil added. | | | |

In the control system 1, only a cathode-anode current of the order of 0.1A occurred, showing a very low reaction rate. In the control system 2, a phenomenon of the cathode potential declining to a value of the order of -5V was observed. Even under such strong reduction potential conditions, the nonexistence of the diaphragm between the anode and the cathode led to the contact of the contaminated solid material in the system with the anode as well as the cathode, with the result that the dissolution of lead from the solid phase did not proceed. In the test system having the diaphragm disposed, on the other hand, the slurry containing the heavy metal-containing contaminated solid material was maintained in a strongly acidic atmosphere and a reducing atmosphere, whereby more than 98% of the sparingly soluble lead adhering to the soil was deposited on the cathode, and removed from the soil and interstitial water.

[Example 4] Electrolytic deposition and removal test on lead in flying ash

As shown in Fig. 1, a cation exchange membrane (NEOSEPTA CMB, Tokuyama Corp.) was installed at the center of a 2000 mL PLEXIGLAS reactor to divide the reactor into two portions, creating a cathode zone and an anode zone.
In the cathode zone, 100 g of molten flying ash produced when flying ash from refuse incineration was further melted with plasma (lead content 36 g/kg; site of collection: C refuse incinerating melting furnace), 700 mL of tap water, and 150 mL of 1:1 hydrochloric acid were added, and stirred at a speed of 500 rpm with a Teflon (registered trademark) agitating blade to establish a test system. A cathode as a copper wire netting was inserted into the test system, and connected to an anode via a potentiostat (constant potential power supply device). In the anode zone, 710 mL of tap water and 90 mL of 1:1 sulfuric acid were added, and an anode made of ruthenium oxide-coated titanium was inserted.
A reference electrode was inserted into the cathode zone, and the potentiostat was adjusted such that the cathode potential would be -0.25V with respect to a hydrogen standard electrode potential. After the cathode potential reached -0.25V, an operation was performed for 60 minutes. Then, a slurry within the reactor was centrifuged to carry out solid-liquid separation. During the reaction time, the pH of the slurry in the cathode zone was maintained at 1.0 or lower. After centrifugation, the lead concentration in the liquid phase and the lead content of the soil were measured by the atomic absorption method.
Using the same experimental apparatus, a control system set to have a cathode potential of -0.1V with respect to the hydrogen standard electrode potential was subjected to an operation for 60 minutes, and similarly centrifuged, whereafter the lead concentrations in the liquid phase and the soil were measured. The results are shown in Table 4.

[Table 4]

Table 4 Results of electrolytic deposition and removal test on lead in flying ash

| Experimental system (potential control conditions) | Liquid phase lead dissolution concentration (rate of weight distribution into liquid phase %) | Concentration of lead remaining in flying ash (rate of weight distribution into flying ash %) | (Rate of weight distribution onto electrode %)* |
|---|---|---|---|
| Test system (-0.25V) | 0.08 mg/L (0.002%) | 420 mg/kg (1.2%) | (98.8%) |

Table continued

| Experimental system (potential control conditions) | Liquid phase lead dissolution concentration (rate of weight distribution into liquid phase %) | Concentration of lead remaining in flying ash (rate of weight distribution into flying ash %) | (Rate of weight distribution onto electrode %)* |
|---|---|---|---|
| Control system (-0.1V) | 222 mg/L (6.2%) | 27500 mg/kg (76%) | (17.8%) |
| * Rate of lead weight distribution onto electrode was determined by subtraction from the lead weight in the flying ash added. | | | |

Table 4 shows that in the test system, the slurry containing the heavy metal-contaminated flying ash was maintained in a strongly acidic atmosphere and a reducing atmosphere (-0.25V with respect to the hydrogen standard electrode), whereby more than 98% of the lead in the flying ash was deposited on the cathode, and removed from the solid phase and the liquid phase.

[Example 5] Electrolytic deposition and removal test on lead-contaminated soil

Under the same conditions as those in Example 1, a lead removal test was conducted, with an operation being performed for 20 minutes and the cathode potential being set at -0.16V. The results of the test are shown below.

[Table 5]

Table 5 Results of electrolytic deposition and removal test on lead-contaminated soil

| Experimental system (potential control conditions) | Liquid phase lead dissolution concentration (rate of weight distribution into liquid phase %) | Concentration of lead remaining in soil (rate of weight distribution into soil %) | (Rate of weight distribution onto electrode %)* |
|---|---|---|---|
| Test system (-0.16V) | 0.07 mg/L (0.01%) | 90 mg/kg (1,8%) | (98.2%) |
| * Rate of lead weight distribution onto electrode was determined by subtraction from the lead weight in the soil added. | | | |

[Example 6] Electrolytic deposition and removal test on lead-contaminated soil

As shown in Fig. 3, a 2000 mL acrylic container was used as a slurry formation tank. A cation exchange membrane (NEOSEPTA CMB, Tokuyama Corp.) was installed at nearly the center of the slurry formation tank to divide the tank into two portions, creating a cathode zone and an anode zone.

In the cathode zone, 100 g of sparingly water-soluble lead-contaminated soil (lead content 5,000 mg/kg dry soil; site of collection: D automobile factory), 800 mL of tap water, 50 mL of 1:1 hydrochloric acid were added, and stirred at a speed of 500 rpm with a Teflon (registered trademark) agitating blade to establish a test system.

A cathode as a copper wire netting was inserted into the test system, and connected to an anode via a potentiostat (constant potential power supply device). In the vicinity of the cathode, a partition was formed using a protective member composed of a nylon mesh (size of each opening 1.0 mm) to avoid a shearing force exerted by solids of large particle diameters on the surface of the cathode.

In the anode zone, 800 mL of tap water and 5 mL of 1:1 hydrochloric acid were added, and an anode of graphite was inserted.

A reference electrode was inserted into the cathode zone, and the potentiostat was adjusted such that the cathode potential would be -0.25V with respect to a hydrogen standard electrode potential. After the cathode potential reached -0.25V, an operation was performed for 20 minutes. Then, a slurry within the tank was suction filtered using a GF/B filter paper to carry out solid-liquid separation. During the reaction time, the pH of the slurry in the cathode zone was maintained at 1.0 or lower. After suction filtration, the lead concentration in the filtrate and the lead content of the soil after filtration were measured by the atomic absorption method. A control system constructed using the same experimental apparatus as that of the test system, except that the cathode-protecting member was not used, was similarly subjected to suction filtration and solid-liquid separation, whereafter the lead concentrations in the filtrate and the soil after filtration were measured. The results are shown in Table 6.

[Table 6]

Table 6 Results of electrolytic deposition test on lead-contaminated soil

| Experimental system | Liquid phase dissolution concentration (rate of weight distribution into liquid phase %) | Concentration remaining in soil (rate of weight distribution into soil %) | Proportion of electrolytic deposit* (rate of weight distribution onto electrode %) |
|---|---|---|---|
| Test system | 0.05 mg/L (0.01%) | 225 mg/kg (4.50%) | 95.5% |
| Control system | 0.09 mg/L (0.02%) | 423 mg/kg (8.46%) | 91.5% |
| * Rate of lead weight distribution onto electrode was determined by subtraction from the weight of lead remaining in the soil added. | | | |

Table 6 shows that the concentration of lead distributed onto the electrode was increased by suppressing the shearing force of the slurry imparted to the cathode. Accordingly, it was confirmed that the present invention was able to prevent the peeling and redissolution of heavy metals electrolytically deposited on the cathode surface.

[Example 7] Electrolytic deposition and removal test on lead-contaminated soil

As shown in Fig. 4, an acrylic reaction vessel of an internal volume of 2000 mL with a height of 0.4 m, a width of 0.1 m, and a depth of 0.05 m was divided at the center thereof into two compartments, each measuring 0.4 m in height, 0.05 m in width, and 0.05 m in depth, with the use of a cation exchange membrane (NEOSEPTA CMB, Tokuyama Corp.) to define a cathode compartment and an anode compartment. In the cathode compartment, 100 g of sparingly water-soluble lead-contaminated soil (lead content 5,000 mg/kg dry soil; site of collection: D automobile factory), 800 mL of tap water, and 50 mL of 1:1 hydrochloric acid were added, and stirred at a speed of 500 rpm with a Teflon (registered trademark) agitating blade to establish a test system. A cathode as a copper wire netting was installed in the test system at a depth of 2 cm below the surface of water, and connected to an anode via a potentiostat (constant potential power supply device). Using a TYGON tube and a circulating pump, a supernatant clear fluid was sucked from an upper portion of the apparatus, and poured again into the apparatus from its bottom, thereby constructing a circulating system. A circulating water flow was adjusted to a flow velocity such that only a fine particle fraction contained in the soil was able to arrive at the cathode, and lead depositing on the cathode surface would not peel off (in the present Example, the flow velocity was 0.5 L/min).

In the anode compartment, 800 mL of tap water and 5 mL of 1:1 hydrochloric acid were added, and an anode of graphite was inserted. A reference electrode was inserted into the cathode compartment, and the potentiostat was adjusted such that the potential of the cathode would be -0.25V with respect to a hydrogen standard electrode. After the cathode potential reached -0.25V, an operation was performed for 20 minutes. Then, a slurry within the reaction vessel was suction filtered using a GF/B filter paper to carry out solid-liquid separation. During the reaction time, the pH of the slurry in the cathode compartment was maintained at 1.0 or lower. After suction filtration, the lead concentration in the filtrate and the content of lead remaining in the soil after filtration were measured by the atomic absorption method.

A control system without the slurry circulating system was prepared, and subjected to suction filtration and solid-liquid separation under the same experimental conditions as those for the test system. Then, the lead concentration in the filtrate and the content of lead remaining in the soil after filtration were measured by the atomic absorption method. The results are shown in Table 7.

[Table 7]

Table 7 Results of electrolytic deposition test on lead-contaminated soil

| Experimental system | Liquid phase dissolution concentration (rate of weight distribution into liquid phase %) | Concentration remaining in soil (rate of weight distribution into soil %) | Proportion of electrolytic deposit* (rate of weight distribution onto electrode %) |
|---|---|---|---|
| Test system | 0.05 mg/L (0.01%) | 132 mg/kg (2.64%) | 97.3% |
| Control system | 0.08 mg/L (0.02%) | 471 mg/kg (9.42%) | 90.5% |
| * Rate of lead weight distribution onto electrode was determined by subtraction from the weight of lead remaining in the soil added. | | | |

[Example 8] Electrolytic deposition and removal test on lead-contaminated soil

As shown in Fig. 5, a 2400 ml clarification reaction vessel 2 formed of an acrylic was partitioned at the center thereof with a cation exchange membrane (NAFION, DuPont) such that the cathode zone was 1,400 ml in volume, and the anode zone was 1,000 ml in volume. In a slurry formation section 2a, a copper electrode was installed as a cathode for deposition C-2 at the position closest to the membrane, and copper electrodes were installed as cathode for dissolutions C-1a and C-1b at the position farthest from the membrane. In a separation section 2b, two carbon electrodes (TOKAI CARBON CO., LTD.) were installed as anodes A-1 and A-2 at a position 2 cm away from the membrane. Both cathodes were wired in series, and connected to an anode via a potentiostat (constant potential power supply device).
In the slurry formation section 2a, 100 g of sparingly water-soluble lead-contaminated soil (lead content 5,000 mg/kg dry soil; site of collection: E chemical plant), 1,300 mL of tap water, and 80 mL of 1:1 hydrochloric acid were added, and stirred at a speed of 500 rpm with a PTFE (tetrafluoroethylene polymer) agitating blade to keep the resulting slurry in a nearly homogeneous state. In the separation section 2b, 800 mL of tap water and 5 mL of 1:1 sulfuric acid were added. In this manner, a test system was established. A reference electrode B-1 was inserted into the cathode zone, and the potentiostat was adjusted such that the potential of the cathode would be -0.25V with respect to a hydrogen standard electrode. After the potential of the cathode reached -0.25V, an operation was performed for 20 minutes. Then, the slurry within the reaction vessel 2 was suction filtered using a GF/B filter paper to carry out solid-liquid separation. During the reaction time, the pH of the slurry in the cathode zone was maintained at 1.0 or lower. After suction filtration, the lead concentration in the filtrate and the content of lead remaining in the soil after filtration were measured by the atomic absorption method. A control system treated under the same conditions, except for the removal of the cathode for dissolutions C-1a and C-1b, was similarly subjected to suction filtration and solid-liquid separation. Then, the lead concentrations in the filtrate and in the soil after filtration were measured. The results are shown in Table 8.

[Table 8]

Table 8 Results of electrolytic deposition and removal test on lead-contaminated soil

| Experimental system | Liquid phase dissolution concentration (rate of weight distribution into liquid phase %) | Concentration remaining in soil (rate of weight distribution into soil %) | (Rate of weight distribution onto electrode %)* |
|---|---|---|---|
| Test system | 0.05 mg/L (0.01%) | 77 mg/kg (1.54%) | 98.4% |
| Control system | 0.08 mg/L (0.02%) | 166 mg/kg (3.32%) | 96.6% |
| * Rate of lead weight distribution onto electrode was determined by subtraction from the weight of lead in the soil added. | | | |

From Table 8, it is understood that a better effect of removing heavy metals contained in the contaminated solid material than that of conventional technologies was obtained by using a plurality of cathodes, namely, cathodes for dissolution and deposition.

[Example 9] Electrolytic deposition and removal test on lead-contaminated soil by a plurality of electrodes

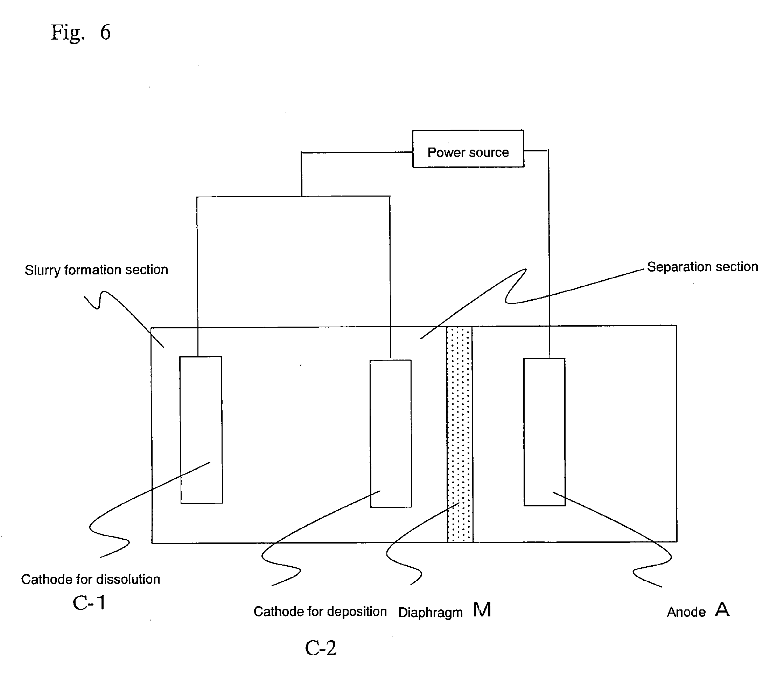

As shown in Fig. 6, a square-shaped 2400 mL clarification reaction vessel formed of transparent polyvinyl chloride was partitioned at the center thereof with a cation exchange membrane (NAFION, DuPont) such that the cathode zone was 1,400 mL in volume, and the anode zone was 1,000 mL in volume. In the cathode zone, a copper electrode was installed as a cathode for deposition C-2 at the position closest to the membrane, and a copper electrode was installed as a cathode for dissolution C-1 at the position farthest from the membrane. In the anode zone, a carbon electrode (TOKAI CARBON CO., LTD.) was installed as an anode A at a position 2 cm away from the membrane. Both cathodes were wired in series, and connected to the anode via a potentiostat (constant potential power supply device).

In the cathode zone, 100 g of sparingly water-soluble lead-contaminated soil (lead content 5,000 mg/kg dry soil; site of collection: E chemical plant), 1,300 mL of tap water, and 80 mL of 1:1 hydrochloric acid were added, and stirred at a speed of 500 rpm with a PTFE (tetrafluoroethylene polymer) agitating blade to keep the mixture nearly homogeneous. In the anode zone, 800 mL of tap water and 5 mL of 1:1 sulfuric acid were added. In this manner, a test system was established. A reference electrode B-1 was inserted into the cathode zone, and the potentiostat was adjusted such that the potential of the cathode would be -0.25V with respect to a hydrogen standard electrode. After the potential of the cathode reached -0.25V, an operation was performed for 20 minutes. Then, a slurry within the clarification reaction vessel 2 was suction filtered using a GF/B filter paper to carry out solid-liquid separation. During the reaction time, the pH of the slurry in the cathode zone was maintained at 1.0 or lower. After suction filtration, the lead concentration in the filtrate and the content of lead in the soil after filtration were measured by the atomic absorption method.

A control system treated under the same conditions, except for the removal of the cathode for dissolution C-1, was similarly subjected to suction filtration and solid-liquid separation. Then, the lead concentrations in the filtrate and in the soil after filtration were measured. The results are shown below.

[Table 9]

Table 9 Results of electrolytic deposition and removal test on lead-contaminated soil by plural electrodes

| Experimental system (potential control conditions) | Liquid phase lead dissolution concentration (rate of weight distribution into liquid phase %) | Concentration of lead remaining in soil (rate of weight distribution into soil %) | (Rate of weight distribution onto electrode %)* |
|---|---|---|---|
| Test system (-0.25V) | 0.04 mg/L (0.01%) | 70 mg/kg (1.4%) | (98.6%) |
| Control system (-0.25V) | 0.09 mg/L (0.02%) | 160 mg/kg (3.2%) | (96.8%) |
| * Rate of lead weight distribution onto electrode was determined by subtraction from the weight of lead in the soil added. | | | |

[Example 10] Electrolytic deposition and removal test on lead-contaminated soil

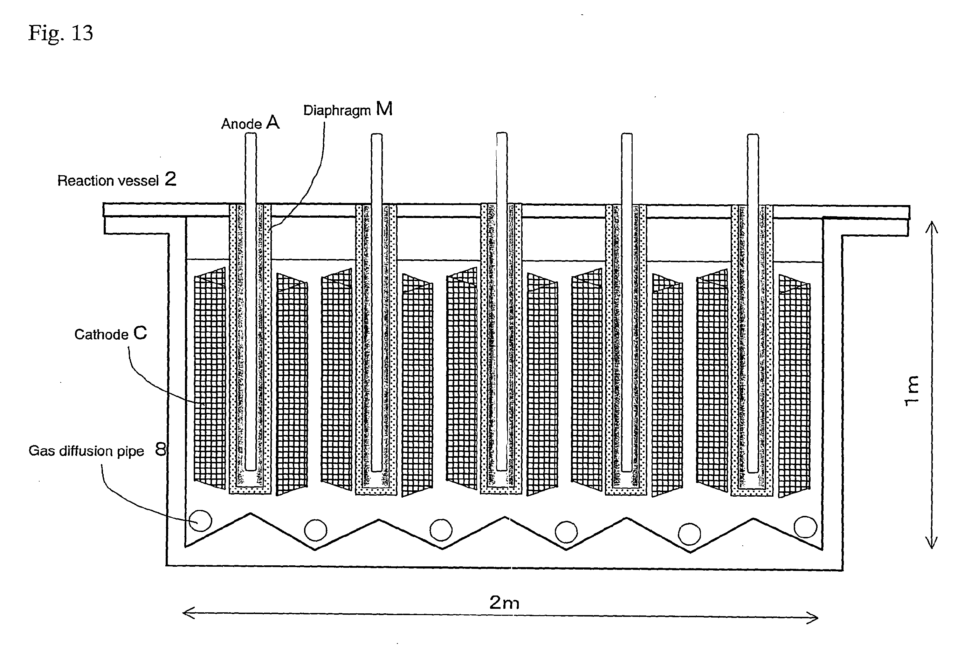

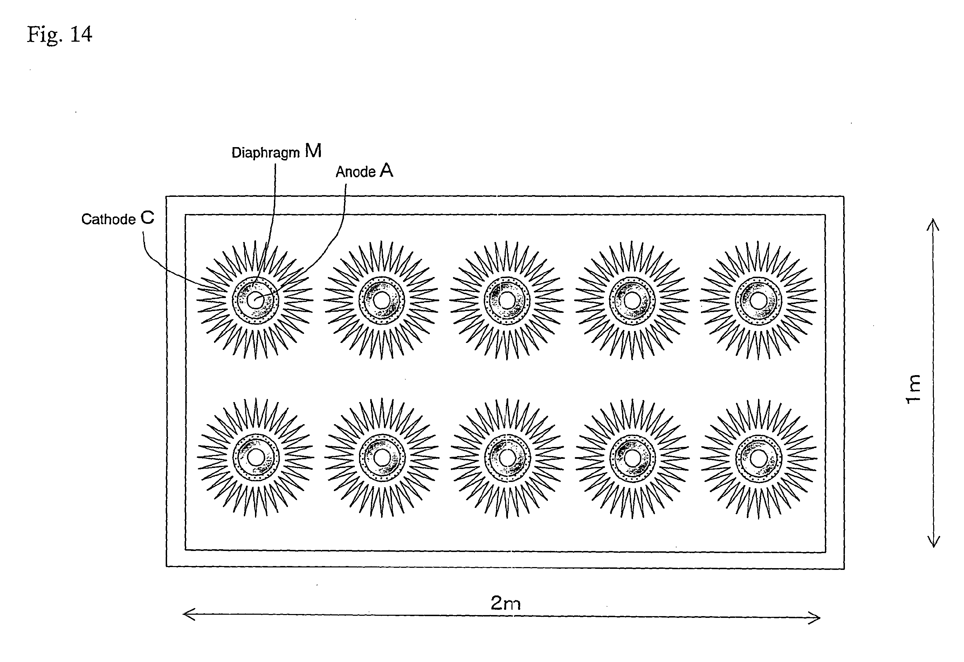

A rectangular 2000 L reactor (width 2 m, depth 1 m, height 1 m) shown in Fig. 13 and Fig. 14 (plan view of Fig. 13) was charged with 200 kg of lead-contaminated soil (lead content 3,000 mg/kg dry soil; site of collection: A paint factory), 1,600 L of tap water, and 100 L of 1:1 hydrochloric acid. Six nitrogen gas diffusion pipes were arranged at the bottom of the reactor, and the mixture was stirred with a gas at a gas blow rate of 2 $m^3$/min, whereby a test system was established. As shown in Fig. 14, ten cylindrical diaphragm units (ASTOM ED-CORE) with a diameter of 60 mm combined with anodes were arranged (effective membrane area 1.5 $m^2$), and a cathode comprising a copper wire netting was disposed in a stellate shape around each of the units. A 5% sulfuric acid solution was charged into the diaphragm unit to serve as an anode reaction liquid. The cathode was connected to the anode via a rectifier, and an operation was performed for 20 minutes at a constant current of +2000A. The cathode potential immediately after start of the operation was of the order of 0.0V, but declined to a value of the order of -0.3V in several minutes. During this period, the substance having an oxidative power in the liquid is assumed to have been reductively consumed. Then, until 20 minutes later when the operation was stopped, the potential gradually decreased to -0.66V. During this period, it is assumed that deposition of lead proceeded, the lead concentration in the liquid phase declined, and the potential shifted to a low potential in order to maintain a constant current.

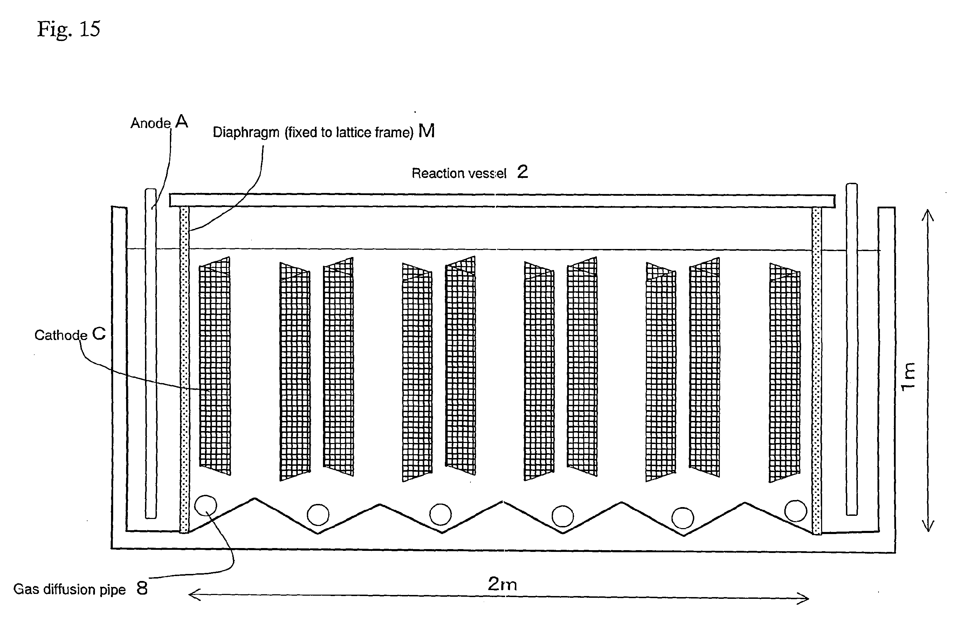

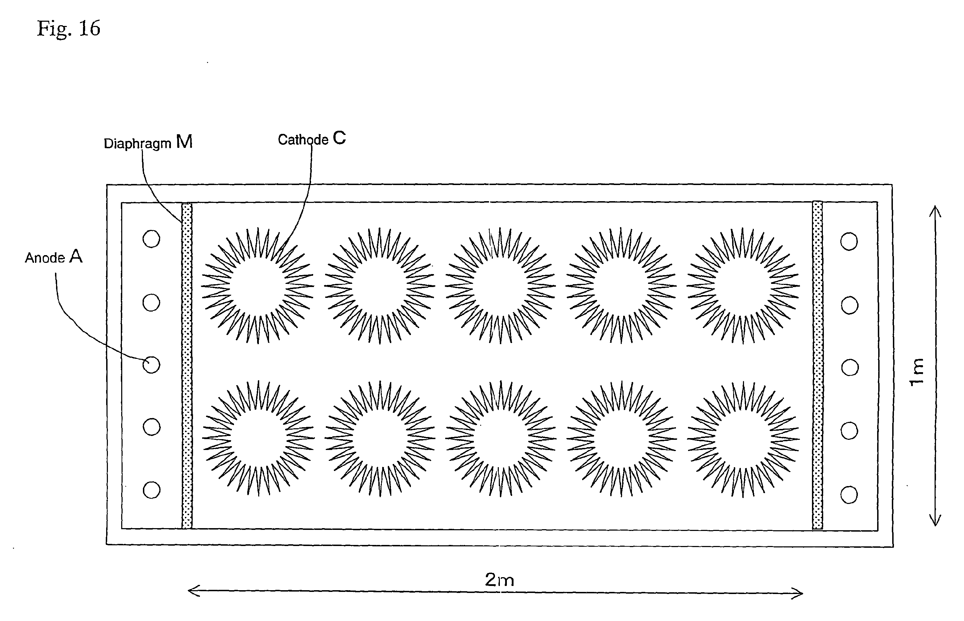

After 20 minutes of the operation, slurry within the reactor was collected, centrifuged, and then suction filtered using a GF/B filter paper to carry out solid-liquid separation. After suction filtration, the lead concentration in the filtrate and the content of lead in the soil after filtration were measured by the atomic absorption method. As a control system, the wall surfaces at both ends of the apparatus of Figs. 13 and 14 were detached as shown in Figs. 15 and 16, a cation exchange flat membrane (ASTOM NEOSEPTA CMB) was fixed to a lattice frame 10 cm square at each end so as to provide an effective area of 1.44 $m^2$, an anode zone of 200 L in volume was provided outwardly of each membrane, 5 of the same anodes as used in the test system were installed on each side, and a 5% sulfuric acid solution was charged as a reaction liquid. In the reactor, 10 of the same cathodes as used in the test system were arranged. Other conditions were set to be the same as those in the test system, and a constant-current operation was performed for 20 minutes. Then, the lead concentrations were measured. The results are shown in Table 10.

[Table 10]

Table 10 Results of electrolytic deposition and removal test on lead-contaminated soil

| Experimental system | Liquid phase dissolution concentration (rate of weight distribution into liquid phase %) | Concentration remaining in soil (rate of weight distribution into soil %) | (Rate of weight distribution onto electrode %)* |
|---|---|---|---|
| Cylindrical membrane unit (test system) | 0.3 mg/L (0.07%) | 45mg/kg(1.5%) | (98.4%) |
| Flat membrane (control system) | 27 mg/L (6.4%) | 414 mg/kg (13.8%) | (79.8%) |
| * Rate of lead weight distribution onto electrode was determined by subtraction from the weight of lead in the soil added. | | | |

Table 10 shows that the diaphragm unit was applied instead of the flat membrane, and the cathodes were arranged around the diaphragm unit, whereby electrolytic deposition of lead proceeded efficiently even in the large reactor, and more than 98% of sparingly soluble lead adhering to the soil deposited on the electrode, and was removable from the soil and interstitial water. As noted here, a better effect of removing lead contained in the contaminated solid material than that of conventional technologies was obtained by using the present invention.

[Example 11] Electrolytic deposition and removal test on tin-contaminated soil

The same test as in Example 10 was conducted using the 2000 L rectangular reactor shown in Figs. 13 and 14 as the test system, and the modified 2000 L rectangular reactor shown in Fig. 15 and 16 (plan view of Fig. 15) as the control system. As the contaminated material, 200 kg of tin-contaminated soil (tin content 530 mg/kg dry soil; site of collection: F drug plant) was used instead of the lead-contaminated soil. The results are shown in Table 11.

[Table 11]

Table 11 Results of electrolytic deposition and removal test on tin-contaminated soil

| Experimental system | Liquid phase dissolution concentration (rate of weight distribution into liquid phase %) | Concentration remaining in soil (rate of weight distribution into soil %) | (Rate of weight distribution onto electrode %)* |
|---|---|---|---|
| Cylindrical membrane unit (test system) | 0.2 mg/L (0.3%) | 24 mg/kg (4.5%) | (95.2%) |
| Flat membrane (control system) | 4.5mg/L(7.2%) | 78 mg/kg (14.7%) | (78.1%) |
| * Rate of tin weight distribution onto electrode was determined by subtraction from the weight of tin in the soil added. | | | |

Table 11 shows that the diaphragm unit was applied instead of the flat membrane, and the cathodes were arranged around the diaphragm unit, whereby electrolytic deposition of tin proceeded efficiently even in the large reactor, and more than 95% of sparingly soluble tin adhering to the soil deposited on the electrode, and was removable from the soil and interstitial water. As noted here, a better effect of removing tin than that of conventional technologies was obtained by using the present invention.

INDUSTRIAL APPLICABILITY

According to the present invention, heavy metals, including their sparingly soluble fractions (portions), can be reliably removed from a contaminated solid material such as soil, sludge, sediments, wastes, or incineration ash, which has been contaminated with the heavy metals. Since the heavy metal contents in the contaminated solid material can themselves be lowered, there can be obtained the effect that the risk of secondary contamination due to the dissolution of the heavy metals can be eliminated not only at the time of treatment, but also in the future.

According to the present invention, moreover, heavy metals, including their sparingly soluble fractions (portions), can be reliably removed from a contaminated solid material such as soil, sludge, sediments, wastes, or incineration ash, which has been contaminated with the heavy metals. After the heavy metals contained in the contaminated solid material are electrolytically deposited on the surface of the cathode, it is possible to prevent peeling of the heavy metals from the cathode surface and the redissolution of the heavy metals into the slurry.

Furthermore, according to the present invention, sparingly soluble fractions (portions) of heavy metals can be reliably dissolved by the cathode for dissolution out of a contaminated solid or liquid material such as soil, sludge, sediments, wastes, incineration ash, industrial waste water, surface water, groundwater, or seawater, which has been contaminated with the heavy metals. The heavy metals dissolved into an aqueous solution are deposited on the cathode for deposition. Thus, the heavy metals can be removed more reliably than the conventional technologies. Even in an upsized apparatus necessary for actual environmental cleanup, the number of diaphragm-electrode units is increased, whereby the distance between the membranes and/or the distance between the electrode and the reaction liquid (or slurry) can be maintained. Hence, treatment can be carried out without decreasing the efficiency of removal and the rate of reaction.

**Claims**

1. A contaminated solid material clarification method for removing heavy metals from a contaminated solid material containing the heavy metals, comprising:

   performing a dissolution step and a separation step in parallel in an identical container, the dissolution step being a step of dissolving heavy metal ions from the solid contaminated material, and the separation step being a step of separating the dissolved heavy metal ions from the contaminated solid material and interstitial water; and maintaining the contaminated solid material in a condition of a reducing atmosphere and a strongly acidic or strongly alkaline atmosphere until dissolution and separation of the heavy metal ions are completed.

2. The method according to claim 1, **characterized in that** the reducing atmosphere is provided by rendering a cathode potential -0.16V or lower with respect to a hydrogen standard electrode potential.

3. The method according to claim 1, **characterized in that** the reducing atmosphere is provided by rendering a cathode potential -0.25V or lower with respect to a hydrogen standard electrode potential.

4. The method according to claim 1, **characterized in that** the reducing atmosphere is provided by controlling a current density from a cathode to an anode within a range of 0.01 to 10A/L of a reaction liquid.

5. The method according to any one of claims 1 to 4, wherein the strongly acidic atmosphere is such that a pH of the interstitial water of the contaminated solid material is 3 or lower, and the strongly alkaline atmosphere is such that the pH of the interstitial water of the contaminated solid material is 12 or higher.

6. The contaminated solid material clarification method according to any one of claims 1 to 5, **characterized in that** the step of separating the heavy metal ions includes a step of depositing the heavy metals on a cathode surface, and during the deposition step, the heavy metals are deposited on the cathode surface under conditions, under which a flow of a slurry containing at least the contaminated solid material is controlled or suppressed so as to decrease a shearing force of the slurry acting on the cathode surface so that the shearing force acting on the cathode surface does not impede deposition of the heavy metals.

7. The method according to claim 6, **characterized in that** decrease of the shearing force is performed by positioning a cathode upwardly in the slurry, and controlling a solid particle size distribution in the slurry such that solids of small particle diameters in the slurry are present at an upper position in the slurry, and solids of large particle diameters in the slurry are present at a lower position in the slurry.

8. The method according to claim 7, **characterized in that** the solid particle size distribution in the slurry is controlled by imparting an upward flow of the slurry at a controlled flow velocity.

9. The contaminated solid material clarification method according to any one of claims 1 to 8, **characterized in that** plural cathodes are arranged in the reaction vessel, and the dissolution step and the separation step are performed in parallel in the reaction vessel.

10. The contaminated solid material clarification method according to claim 9, **characterized in that** at least one of the plural cathodes is a cathode for dissolution mainly acting to dissolve the heavy metal ions, and at least one of the other cathodes is a cathode for deposition mainly acting to deposit the heavy metal ions.

11. The contaminated solid material clarification method according to claim 10, **characterized in that** the cathode for deposition is located at a position near to an anode than the cathode for dissolution.

12. The contaminated solid material clarification method according to claim 10 or 11, **characterized in that** the cathode for deposition and the cathode for dissolution are controlled to electrode potentials different from each other.

13. The contaminated solid material clarification method according to any one of claims 10 to 12, **characterized in that** the cathode for deposition and the cathode for dissolution comprise substances having standard electrode potentials different from each other, and the substance having a relatively high standard electrode potential is used as the cathode for deposition, while the substance having a relatively low standard electrode potential is used as the cathode for dissolution.

14. The contaminated solid material clarification method according to any one of claims 10 to 13, **characterized in that** the cathode for deposition is composed of a substance on which the deposited heavy metals are electrodeposited more easily than a substance constituting the cathode for dissolution.

15. A contaminated solid material clarification apparatus including a reaction vessel comprising contaminated solid material supply means for supplying a contaminated solid material containing heavy metals, a cathode for providing a reducing atmosphere, a diaphragm, and an anode, and wherein
the diaphragm defines an anode zone containing the anode, and a cathode zone containing the cathode and the contaminated solid material supply means, and
the cathode zone is maintained in the reducing atmosphere and a strongly acidic or strongly alkaline atmosphere, and dissolution of heavy metal ions from the solid contaminated material, and separation of the dissolved heavy metal ions from the contaminated solid material and interstitial water are performed in parallel in the reaction vessel.

16. The contaminated solid material clarification apparatus according to claim 15, **characterized in that** the cathode zone of the reaction vessel is further provided with acidic substance or alkaline substance supply means for supplying an acidic substance or an alkaline substance.

17. The contaminated solid material clarification apparatus according to claim 15 or 16, **characterized in that** the reaction vessel is further provided with shearing force suppressing means to decrease a shearing force exerted on a surface of the cathode by a slurry containing at least the contaminated solid material supplied to the reaction vessel, and also maintain a state of contact between the cathode and the slurry.

18. The contaminated solid material clarification apparatus according to claim 17, **characterized in that** the shearing force suppressing means is slurry upward flow providing means for giving the slurry as an upward flow at a predetermined flow velocity.

19. The contaminated solid material clarification apparatus according to claim 18, **characterized in that** the slurry upward flow providing means includes a slurry withdrawal port provided in an upper portion in an interior of the reaction vessel, a slurry introduction port provided at a bottom of the reaction vessel, and a circulating pump for circulating the slurry from the slurry withdrawal port to the slurry introduction port, and is arranged to raise the slurry from the bottom of the reaction vessel in the reaction vessel at a desired speed.

20. The contaminated solid material clarification apparatus according to claim 17, **characterized in that** the shearing force suppressing means is a flow controlling mechanism for controlling a flow of the slurry so as to reduce the shearing force of the slurry flow exerted on the cathode surface, and is a flow controlling member composed of one or more materials selected from a plate material, a porous material, a honeycomb-shaped material, and a network-shaped material.

21. The contaminated solid material clarification apparatus according to any one of claims 15 to 20, **characterized in that** plural cathodes are arranged in the reaction vessel.

22. The contaminated solid material clarification apparatus according to claim 21, **characterized in that** at least one of the plural cathodes is a cathode for dissolution mainly acting to dissolve the heavy metal ions, and at least one of the other cathodes is a cathode for deposition mainly acting to deposit the heavy metal ions.

23. The contaminated solid material clarification apparatus according to claim 22, **characterized in that** the cathode for deposition is located at a position near to an anode than the cathode for dissolution.

24. The contaminated solid material clarification apparatus according to claim 22 or 23, **characterized in that** the cathode for deposition and the cathode for dissolution are controlled to electrode potentials different from each other.

25. The contaminated solid material clarification apparatus according to any one of claims 22 to 24, **characterized in that** the cathode for deposition and the cathode for dissolution comprise substances having standard electrode potentials different from each other, and the substance having a relatively high standard electrode potential is used as the cathode for deposition, while the substance having a relatively low standard electrode potential is used as the cathode for dissolution.

26. The contaminated solid material clarification apparatus according to any one of claims 22 to 25, **characterized in that** the cathode for deposition is composed of a substance on which the deposited heavy metals are electrodeposited more easily than a substance constituting the cathode for dissolution.

27. The contaminated solid material clarification apparatus according to any one of claims 15 to 26, **characterized in that** the diaphragm is positioned so as to surround the anode, thereby forming the anode zone inwardly of the diaphragm and forming the cathode zone outwardly of the diaphragm.

28. The contaminated solid material clarification apparatus according to claim 27, **characterized in that** the diaphragm is unitized in a cylindrical, box-shaped or bag-shaped form composed of the diaphragm alone or a combination of the diaphragm and other reinforcement, and the anode is positioned within the unit.

29. The contaminated solid material clarification apparatus according to claim 27 or 28, **characterized in that** the cathodes are arranged in a stellate or radial configuration so as to surround the diaphragm.

30. A clarification apparatus for a contaminated liquid material containing heavy metals, comprising a reaction vessel including a cathode for providing a reducing atmosphere, a diaphragm, and an anode, and wherein
the diaphragm is positioned so as to surround the anode, thereby forming an anode zone inwardly of the diaphragm and forming a cathode zone outwardly of the diaphragm.

31. The clarification apparatus according to claim 30, **characterized in that** acid or alkali supply means for supplying an acid or an alkali to the reaction vessel is further provided.

32. The clarification apparatus according to claim 30 or 31, **characterized in that** the diaphragm is unitized in a cylindrical, box-shaped or bag-shaped form composed of the diaphragm alone or a combination of the diaphragm and other reinforcement, and the anode is positioned within the unit.

33. The clarification apparatus according to any one of claims 30 to 32, **characterized in that** the cathodes are arranged in a stellate or radial configuration so as to surround the diaphragm.

## Fig. 1

## Fig. 2

Fig. 3

A    C

1B

M

Soil/sludge/slime/incineration
ash/sediments                22

26
Water

Acidic or alkaline substance   24

40          42

Circulating liquid

39

28

Anode A

Cathode C

Reference electrode

Power
Supply
device

50 : Cathode-protecting device

Mixer

2

30

Slurry pump

34

32

Solid-liquid
separator      3

36

38

Excess waste water

Clarified dehydrated soil/sludge/slime/incineration ash/sediments

Fig.4

Power supply device

100

115

112

Reference electrode

Contaminated
solid material

Cathode                    Anode

111

113        Diaphragm M

117

Cathode            Anode

113C              113A

119

116

Slurry
circulating
pump

113B

Small

Particle diameter
distribution

Upward flow

Large

121

110

118

122

Circulating slurry        123        Slurry pump

120

Drain

Excess waste water

**Fig. 5**

Clarification apparatus 100A

Clarified dehydrated solids
Clarified dehydrated soil/sludge/slime/incineration ash/sediments

Fig. 6

Separation section

Power source

Slurry formation section

Anode A

Cathode for deposition   Diaphragm M

C-2

Cathode for dissolution

C-1

Fig. 7

Reaction vessel 2

Contaminated material supply means 22

Acid/alkali supply means 24

Water supply means 26

Circulating liquid

40

Cathode C

Clarified solid matter

Slurry pump 34

Diaphragm unit M

Gas diffuser 8

Excess waste water

32

Solid-liquid separation device 3

Cathode

Anode    Reduction potential providing means

Anode A

EP 1 671 711 A1

Fig. 8

Diaphragm

Adhered, welded or sewed
portion

Fig. 9

Reinforcement member

Diaphragm

Fig.10

# Fig. 11

C  Cathode

M  Diaphragm

A  Anode

Diaphragm-electrode unit and cathode viewed from above

Fig. 12

(a)

(b)

Fig. 13

Anode A    Diaphragm M

Reaction vessel 2

Cathode C

Gas diffusion pipe  8

2m

1m

EP 1 671 711 A1

44

Fig. 14

Diaphragm M

Anode A

Cathode C

1 m

2m

Fig. 15

Anode A

Diaphragm (fixed to lattice frame) M

Reaction vessel 2

Cathode C

Gas diffusion pipe 8

2m

1m

EP 1 671 711 A1

Fig. 16

Diaphragm M　　　Cathode C

Anode A

2m

1m

EP 1 671 711 A1

## INTERNATIONAL SEARCH REPORT

International application No.

PCT/JP2004/015032

| A. CLASSIFICATION OF SUBJECT MATTER |
|---|
| Int.Cl$^7$ B09B3/00, 5/00, B09C1/08 |

According to International Patent Classification (IPC) or to both national classification and IPC

### B. FIELDS SEARCHED

Minimum documentation searched (classification system followed by classification symbols)
Int.Cl$^7$ B09B3/00, 5/00, B09C1/08

Documentation searched other than minimum documentation to the extent that such documents are included in the fields searched

| Jitsuyo Shinan Koho | 1926–1996 | Toroku Jitsuyo Shinan Koho | 1994–2004 |
|---|---|---|---|
| Kokai Jitsuyo Shinan Koho | 1971–2004 | Jitsuyo Shinan Toroku Koho | 1996–2004 |

Electronic data base consulted during the international search (name of data base and, where practicable, search terms used)
WPI

### C. DOCUMENTS CONSIDERED TO BE RELEVANT

| Category* | Citation of document, with indication, where appropriate, of the relevant passages | Relevant to claim No. |
|---|---|---|
| A | JP 2000-140819 A (Maeda Corp.), 23 May, 2000 (23.05.00), Column 2, lines 20 to 37; Figs. 2, 3 (Family: none) | 1-33 |
| A | US 5656140 A (Chamberlain Ltd. Inc.), 12 August, 1997 (12.08.97), Figs. 1 to 3; column 3, line 23 to column 6, line 28 (Family: none) | 1-33 |
| A | JP 9-122626 A (The Japan Steel Works, Ltd.), 13 May, 1997 (13.05.97), Column 2, lines 30 to 35; Fig. 1 (Family: none) | 1-33 |

☐ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 09 November, 2004 (09.11.04) | 22 November, 2004 (22.11.04) |

| Name and mailing address of the ISA/ | Authorized officer |
|---|---|
| Japanese Patent Office | |
| Facsimile No. | Telephone No. |

Form PCT/ISA/210 (second sheet) (January 2004)